# EUROPEAN PATENT SPECIFICATION

(11) **EP 3 194 250 B1**
(45) Date of publication and mention of the grant of the patent: **24.10.2018**
(21) Application number: 14766491.6
(22) Date of filing: 17.09.2014
(51) Int. Cl.: B62D 21/15, B62D 33/067

(54) **CAB OVER ENGINE TRUCK**
FRONTLENKER
CAMION À CABINE AVANCÉE

(43) Date of publication of application: 26.07.2017
(73) Proprietor: Kongsberg Automotive As, 3601 Kongsberg (NO)
(72) Inventor: SKIAKER, Simen, N-3613 Kongsberg (NO); SANDBERG, Johan Fredrik, N-3034 Drammen (NO); BRUDELI, Geir, N-3300 Hokksund (NO); LARSEN,Gunnar Magnus, N-3615 Kongsberg (NO); VESTØL, Harald, N-1410 Kolbotn (NO)
(74) Representative: Uexküll & Stolberg
(86) International application number: PCT/EP2014/069761
(87) International publication number: WO 2016/041590

(56) References cited:
- WO-A1-2012/047137
- JP-A- H08 268 347
- US-A1- 2005 225 119

## Description

The present invention is directed to a cab over engine truck having a frame and a cabin mounted on the frame, said cabin having an A pillar and a B pillar in longitudinal direction of the cabin behind the A pillar, said cabin having a cabin strength defined as the force level above which a force acting on the A pillar in the direction of the B pillar causes the A pillar to move closer to the B pillar by permanent cabin deformation, said cabin being mounted to the frame by a connecting structure having a first connector device which is arranged such that, when the cabin impacts on an obstacle in case of a frontal collision, a break occurs in the first connector device when a threshold force between the cabin and the frame is exceeded in a first phase of the collision, and is further arranged such that after the break the first connector device allows for backward movement of the cabin relative to the frame with a low force transfer between cabin and frame below the threshold force for a predetermined backward movement distance of the B pillar relative to the frame in a second phase of the collision.

Trucks of the cab over engine type, also referred to as cab forward or forward control type, have a vertical front or "flat face", with the cabin of the truck sitting above the front axle. This truck type is the most common in Europe and elsewhere in the world except North America because laws restrict the overall vehicle length and because this truck configuration permits longer trailers (in case of a tractor-trailer truck) or a longer cargo area for the same overall length. Because of the very limited crumple zone of the cabin in front of the driver safety measures are of particular concern for this type of truck. This is in particular the case for a head on collision with a trailer. Since the frame of the trailer is in the most common cases longitudinally offset with respect to the cargo compartment i.e. the cargo compartment projects beyond the rear end of the trailer frame, it is the cabin that hits the end of the trailer in case of a trailer back impact crash while the frame of the truck can still move forward with respect to the frame of the trailer over the distance of the longitudinal offset until eventually the frame of the truck impacts on the frame of the trailer. In a trailer back impact the cabin of a cab-over truck is subject to large deformation and rapid deceleration causing injuries to the occupants of the cabin. As already indicated this is caused by a longitudinal offset between the frame and cargo compartment on the trailer. Because of this offset, the majority of the initial impact is acting on the cabin. To deal with this problem prior art trucks have a connecting structure between cabin and frame with a connector device that is released or breaks if the force between the cabin and the frame exceeds a threshold force, whereafter the cabin is allowed to move backwards with respect to the frame with low sliding resistance between cabin and frame. By this the cabin behaves like an independent body released from the frame. This ensures that the cabin is rapidly decelerated to reach a common speed with the trailer. In addition, the longitudinal offset leads to a second impact between trailer frame and truck frame. This may cause the trailer to accelerate and move away from the cabin so that a gap is created between the rear end of the trailer and the front of the cabin.

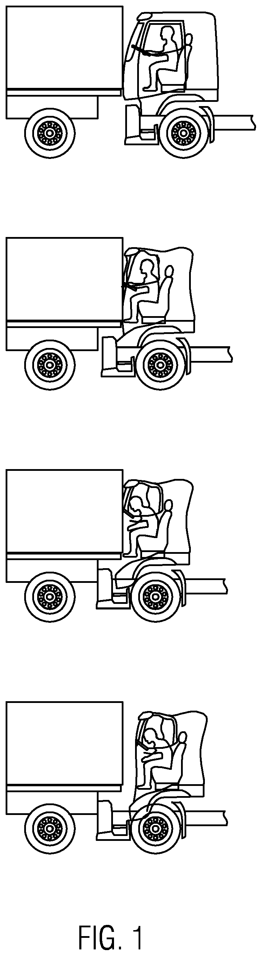

This course of events is schematically illustrated in the sequence of Figure 1. In the uppermost sketch the cabin has just hit the back of the trailer, whereas the frame has not yet hit any part of the trailer and, due to its large momentum, is continuing to move forward substantially unbraked. The resulting force acting between the cabin and the frame above the threshold force causes that the cabin is released from the frame. In the following the cabin is rapidly decelerated (second sketch) to reach a common speed with the trailer. This deceleration is accompanied by a deformation of the cabin. At the same time the force transfer or sliding resistance between cabin and frame, when the cabin moves backwards with respect to the frame, is very low so that the cabin continues to move back with respect to the frame which at the same time continues to move forward towards the frame of the trailer. At the point in time of the third sketch the frame of the truck hits the frame of the trailer which initiates the first substantial deceleration of the truck frame which in turn causes that the trailer is accelerated away from the cabin which still is in a state of a low force transfer to the frame. At the point in time illustrated in the lowermost sketch the truck frame and the trailer have reached common speed. The acceleration of the trailer caused by the impact of the truck frame caused a movement of the trailer away from the cabin so that eventually there is a substantial gap between the front face of the deformed cabin and the back of the trailer.

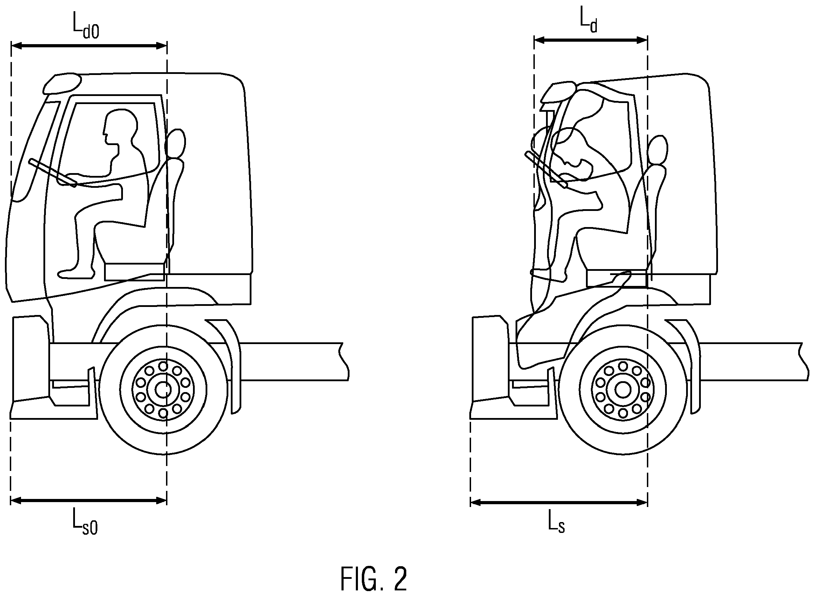

In Figure 2 the front of the truck is shown before and after the collision. On the left hand side the cabin is still intact. The distance between the A pillar and B pillar of the cabin is indicated by L_{d0} (please note that the minor deformation zone in front of the A pillar has been neglected in this sketch). The distance between the front end of the frame of the truck and the B pillar before the impact is indicated by Lₛ₀. After the crash the distance between the A pillar and B pillar has been reduced to L_{d} due to cabin deformation. At the same time the distance between the front end of the frame and the B pillar of the cabin has been increased to Lₛ due to the backward movement of the cabin with respect to the frame after the cabin release at the beginning of the impact.

A truck with a cabin release mechanism is for example described in WO 2012/047137 A1. The connecting structure connecting the cabin to the truck frame comprises a first connector device in the form of a bracket comprising a vertical front portion and a horizontal base portion extending from the front portion and being connected to the cabin. The end of the front portion opposite to the base portion is connected to the truck frame. The opposite end of the front portion is connected to the other end of the base portion by a connecting leg so that the bracket has the shape of a triangle with a central opening. The connecting leg has a zone of weakened material thickness arranged to break when a threshold force between cabin and truck frame is exceeded in a collision. After the break the front portion of the bracket is bending backward, wherein the bracket undergoes deformation in the area in which the front portion is joining the base portion of the bracket. Only a low force is needed for this backward bending so that the cabin may be decelerated with respect to the truck frame very rapidly while the cabin is moving backward. From the dimensions of the bracket shown in WO 2012/047137 A1 it follows that the bracket after the break allows for backward movement of the cabin for more than 300 mm. There is no disclosure in the document regarding any connecting structure between cabin and truck frame which generates any force transfer or sliding resistance between cabin and frame after the low force transfer phase in which the bracket was bending. For this reason the cabin will lose contact with the trailer and will be moving further backward with respect to the truck frame when the second impact between trailer frame and truck frame occurs.

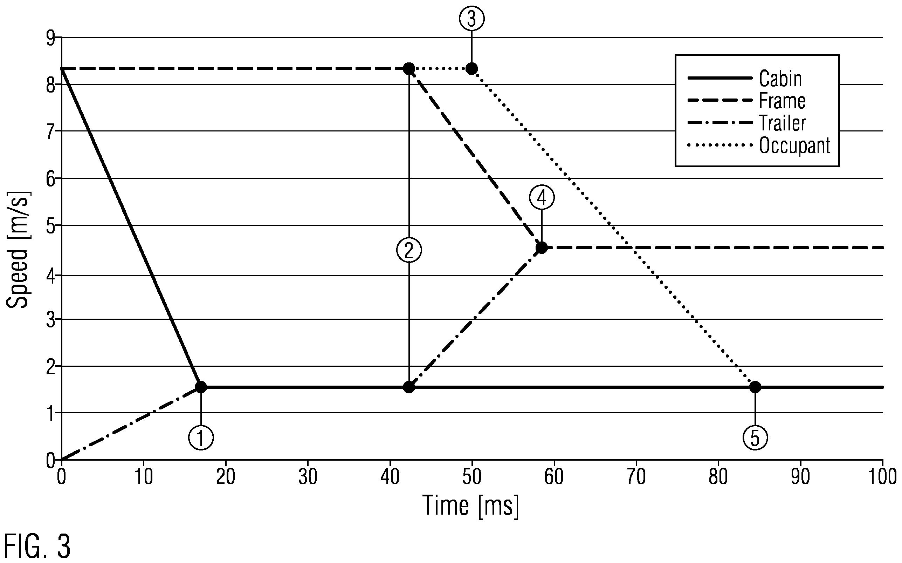

Figure 3 shows a graph of the time dependence of the speed of the various components involved during a frontal collision of such a truck on a trailer at rest. The following crash scenario for a truck impacting on a trailer at rest is considered:
► **Key assumptions:**
   - Moving truck impacting rear end of stationary trailer
   - Trailer rear structure height leads to cabin loading until longitudinal offset between trailer and main frame is closed
   - All deformation zones with constant force level (??)
   - Trailer represented by movable rigid barrier
   - The deformation at the beginning of the collision caused while the force between cabin and frame builds up to the threshold force is not taken into account for the present analysis of accelerations.
► **Truck parameters**
   - Impacting speed: 30 km/h
   - Main frame mass: 5000 kg
   - Cabin mass: 1500 kg
   - Main frame deformation force level: 1200 kN
   - Cabin front deformation force level: 600 kN
   - Cabin sliding resistance force level: 0 kN
► **Trailer parameters**
   - Longitudinal offset: 300 mm
   - Mass: 6500 kg
   - Stationary prior to impact
   - Rigid structure

Before the impact the truck has a speed of about 8,3 m/s as indicated which corresponds to about 30 km/h. The scenario is simplified insofar as it has been assumed that there is no force transfer between the cabin and the frame of the truck after cabin release at the beginning of the impact (in other words the cabin sliding force resistance level is assumed to be 0 in the listing above). This is an approximation because there will be some resistance when the cabin is moving backward with respect to the frame; however, compared to the other forces involved this resistance is very low and may be neglected to a good approximation so that the graph in Figure 3 shows the overall developments during the collision in an illustrative manner which allows to understand the fundamental mechanisms of the impact sequence. As can be seen, after the cabin is released when the threshold force between cabin and frame is exceeded at the beginning of the impact, the cabin (cabin speed shown in full line) is rapidly decelerated while the trailer is accelerated until they reach common speed at the point in time indicated by 1. This cabin deceleration is accompanied by progressive cabin deformation and backward movement of the cabin with respect to the frame. After cabin and trailer reached common speed, they continue to move together over a certain time. At the same time, the frame of the truck (indicated by the dashed line) continues to move forward until the point in time indicated by 2. At this point 2 the frame of the truck impacts on the frame of the trailer which leads to a deceleration of the frame of the truck and an acceleration of the trailer frame until they reach common speed at the point in time indicated by 4. Until a point in time indicated by 3 at about 50 ms, the driver is still at the initial truck speed because the driver's restraint system becomes effective only after a delay. This delay is caused by the time needed for the airbag to be deployed, and the time until slack in the seatbelt system is consumed. After this time 3 there is a strong deceleration of the driver by the restraint system until the driver reaches cabin speed at the point in time 5. Due to the approximation assuming zero force transfer between cabin and truck frame the cabin continues to move (backward with respect to the reference system of the frame of the truck) with respect to the frames of truck and trailer, i.e. the cabin continues to slide backward on the truck frame. Despite of this, one can see one of the severe problems associated with such a crash sequence which is the massive deceleration of the driver between the points in time 3 and 5.

US 2005/225119 A1 discloses a truck with a cabin release mechanism comprising the features of the preamble of claim 1. The first connector device includes a support connected by screws to the frame, which screws are dimensioned such that they fail when a threshold force is exceeded. Thereafter, backward movement of the cabin relative to the frame occurs under deformation of a catch plate. When the catch plate is fully deformed a second connector device in the form of bolts received in the frame provide for a sudden increased force transfer peak between cabin and frame until the bolts fail, whereafter there is no controlled force transfer between cabin and frame.

It is an object of the present invention to arrange a truck of the cabin over engine type to provide more safety for the driver in case of a frontal collision of the truck with the trailer.

This object is achieved by a truck comprising the features of claim 1. Preferred embodiments are set out in the depending claims.

According to the present invention it has been found that upon cabin release when the threshold force between cabin and frame is exceeded in the first phase of a collision a relatively short backward movement distance is sufficient for allowing rapid deceleration of the cabin in the second phase of the collision with a low force transfer between cabin and truck frame, wherein the backward movement distance of the B pillar relative to the frame is in the range between 50 and 150 mm. This is sufficient for safe crash speeds in the typical ranges. The connecting structure has the second connector device arranged such that it causes in a third phase of the collision subsequent to the second phase of low force transfer an increased force transfer between cabin and frame above the threshold force upon further backward movement of the cabin relative to the frame beyond the predetermined backward movement distance, wherein the second connector device is arranged such that the increased force transfer between cabin and frame above the threshold force is kept at a level below the cabin strength. It has been recognized that after a relatively short second phase of the collision with low force transfer between cabin and corresponding to a backward movement of the B pillar in the range between 50 and 150 mm, a controlled increase of force transfer between cabin and truck frame avoids that the cabin and the trailer separate and that the cabin is sliding further backward, but achieves a maximum force transfer to the trailer with the force level exerted by the cabin on the trailer being below the cabin strength so that the increased force transfer generated between the cabin and the trailer does not result in further deformation of the cabin. The increased force transfer level in the third phase of the collision is by at least 30% of the threshold force above the lowest force transfer level in the second phase of the collision with low force transfer.

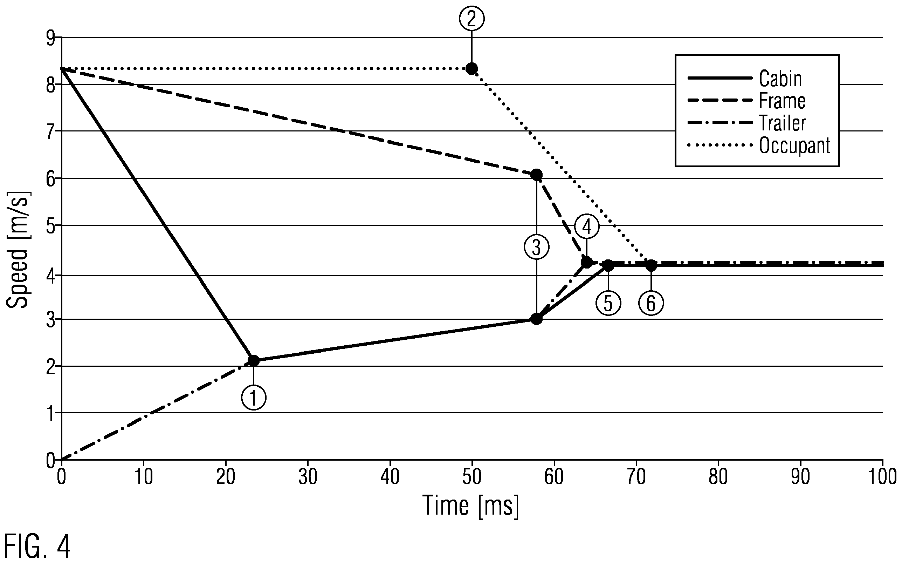

In the following the principles underlying the invention will be illustrated. For that purpose we will first consider the effects of the increased force transfer between cabin and frame, that, according to the present invention, takes place in the third phase of the collision subsequent to the low force transfer phase. This increased force transfer capability between cabin and frame can also be viewed as an increased sliding resistance between cabin and frame upon backward movement of the cabin. For demonstrating the principle and the effects of the increased force transfer phase we will now analyse an increased force transfer situation in an isolated manner, i.e. it is assumed that the increased force transfer starts immediately after cabin release, i.e. without low force transfer second phase, for illustrative purposes. The crash parameters are the same as those used in connection with Figure 3, except that after release of the cabin a constant force transfer level of 200 kN is assumed (instead of 0 kN in Fig.3). Figure 4 shows the time dependence of the speed of the various components involved. At the beginning the cabin (full line) is rapidly decelerated wherein the deceleration is slower and takes longer compared to the zero force transfer case described in connection with Figure 3. After reaching common speed at point in time 1 cabin and trailer continue to move as a unit. The constant increased force transfer between cabin and frame accelerates cabin and trailer as one unit and decelerates the frame of the truck at a constant level until at 3 the frame of the truck impacts on the frame of the trailer. The impact force accelerates the trailer away from the cabin. The acceleration of the cabin is limited to the level provided by the increased force transfer force (divided by the mass of the cabin), and limited to the maximum acceleration level of the trailer. At point in time 4 truck frame and trailer reach common speed, wherein the increased force transfer between cabin and frame keeps accelerating cabin and decelerating the truck frame; there is no force acting on the trailer, it continues at constant speed away from the truck frame. At time 5 truck frame and cabin reach common speed so that there is no relative movement between cabin and frame so that there is no force transfer between cabin and frame due to friction anymore.

The driver or passenger (dotted line) continues at the constant initial speed until point in time 2 is reached which is the time when the passenger restraint system becomes effective, i.e. the airbag is deployed and slack in the safety belts is used up so that the driver is decelerated until point in time 6 where common speed with the remaining components is reached. As can be seen from a comparison with Figure 3 the increased constant force transfer between cabin and frame has also the effect that the speed difference the driver has to span to be at rest relative to the cabin is much lower which corresponds to a reduced risk of injuries.

In addition, the average speed of the cabin is higher in Fig. 4 compared to Fig. 3. Since travelling distance is speed integrated over time, the higher average cabin speed results in a higher stopping length for the driver. Decreasing the speed difference between cabin and driver, and this increasing the stopping length are two effects positively adding together.

Furthermore, by providing an increased force transfer in the third phase of the collision, the negative effects of the elastic collision component is reduced. The elastic component is due to the fact that not the entire momentum of the cabin is transferred to the combined system consisting of trailer and cabin, trailer, but, since the trailer is heavier than the cabin, there is also a certain recoil which accelerates the cabin to move backward relative to the trailer. The increased force transfer is acting against this recoil and keeps the front of the cabin in contact with the trailer.

On the other hand a comparison of Figures 4 and 3 shows that in the case of a constant increased force transfer during the sliding of the cabin backwards on the frame also has a disadvantageous effect, namely the first phase up to the point in time 1 during which the cabin exerts force on the trailer to accelerate the trailer takes longer, wherein this longer force transfer phase from the cabin to the trailer to reach a common speed implies an increased deformation of the cabin. As a result of this increased deformation, the risk of contact injuries for the driver is increased.

In order to reduce the latter effect the present invention provides after the cabin release in the first phase of the collision for a second relatively short phase of very low or essentially zero force transfer between the cabin and the frame, wherein this second low force transfer or sliding resistance phase is limited such that the backward movement distance of the B pillar of the cabin with respect to the truck frame is in the range of 50 to 150 mm. This is accomplished by arranging a first connector device that after a break for cabin release allows for a low force transfer movement of the cabin with respect to the frame over the limited distance mentioned.

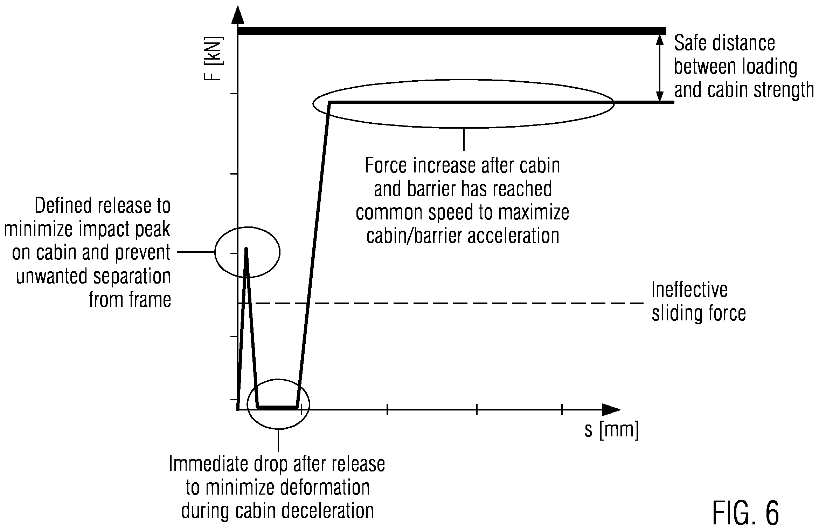

A force transfer profile between cabin and frame during the three phases of the collision is schematically shown in Figure 6. After a break occurs in the first connector device at a defined threshold force in the first phase of the collision the cabin is released and allowed to move with respect to the frame at a very low force transfer level between cabin and frame over a predetermined backward moving distance. Figure 6 shows the force transfer level or sliding resistance of the cabin with respect to the frame as a function of the backward movement of the B pillar of the cabin with respect to the frame. After the cabin release there is an immediate drop of the force transfer level to a very low value, i.e. the cabin is allowed to be moved backward with respect to the frame with very low force transfer to the frame in order to decelerate the cabin to reach common speed with the trailer rapidly and without increased cabin deformation as would be the case if the increased force transfer level would already be present shortly after cabin release or immediately thereafter (see Figure 4 for this scenario which showed the increased deceleration time of the cabin implying the increased deformation of the cabin).

After the low force transfer second phase of the collision corresponding to a backward moving distance of the B pillar with respect to a frame in the range of 50 to 150 mm, the second connector device is arranged to cause an increased force transfer level above threshold force upon further backward movement of the cabin with respect to the frame, as illustrated in Figure 6. However, the second connector device is arranged such that this increased force transfer level is above the threshold force but below the cabin strength so that the force transfer between cabin and frame in the third phase of the collision does not cause further cabin deformation.

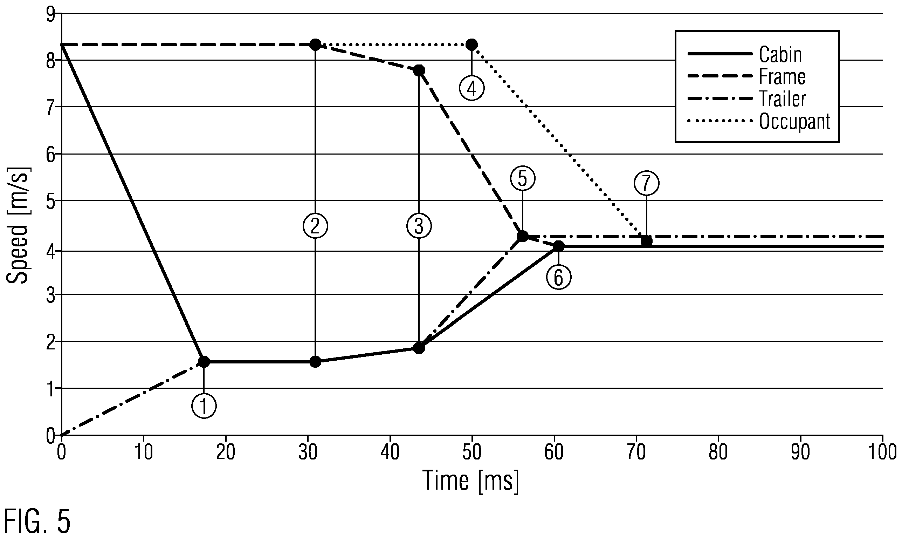

Figure 5 shows the speed of the various components involved in the collision as a function of time, wherein the same parameters have been used as in connection with Figures 3 and 4, except that the cabin sliding resistant force level (or force transfer level) is zero in the second phase of the collision, and is 200 kN in the third phase of the collision with increased force transfer lever. The predetermined backward moving distance of the B pillar with respect to the frame defining the second phase of the collision with low force transfer has been set to 100 mm. One can see that with such force transfer characteristics between the cabin and the frame in the three phases of the collision the cabin is still rapidly decelerated to come to common speed with the trailer at point in time 1 (which allows to retain the rapid deceleration of the cabin and the accompanying lower cabin deformation as in Figure 3, compared to the worse situation in Figure 4). At time 2 the predetermined backward movement distance of the B pillar has been reached, and the third phase of the collision with increased force transfer between cabin and frame caused by the second connector device is started. The sliding force accelerates cabin and barrier as one unit and decelerates main frame.

At point 3 the frame of the truck hits the frame of the trailer. The impact force accelerates the trailer away from the cabin. The acceleration of the cabin is limited to a level determined by the increased force transfer level in the third phase of the collision (more precisely increased force transfer level divided by the mass of the cabin), and limited to the maximum acceleration level of the trailer.

At point in time 4 the driver restraint system starts to be effective to bring the driver to a common speed with respect to the cabin. At this time the airbags are deployed and effective and slack in the safety belt system is eliminated to bring the driver to rest with respect to the cabin.

At point in time 5 main frame and trailer reach common speed. The increased transfer level in the third phase of the collision keeps accelerating the cabin and decelerating the frame of the truck. In this phase no force is acting on the trailer which continues to move at constant speed away from the truck frame.

At point in time 6 truck frame and cabin reached common speed, whereafter there is no more relative movement between cabin and truck frame so that the sliding resistance or increased force transfer level upon backward movement of the cabin with respect to the frame has no more effect since the cabin is not moving anymore with respect to the frame so that there is no sliding resistance.

Finally, at point in time 7 the driver reached the same speed as the cabin, i.e. the driver is at rest with respect to the cabin.

As can be seen from Figure 5 the deceleration of the driver between points 4 and 7 still spans a relatively low speed difference comparable to Figure 4, and is much lower than in case of Figure 3. On the other hand, up to point in time 1 the cabin reaches common speed with the trailer relatively rapidly in Figure 5 comparable to the situation in Figure 3 which rather rapid deceleration is accompanied by a lower cabin deformation compared to the situation as in Figure 3.

As explained above, the main purpose of the low force transfer in the second phase of the collision is to allow that the cabin is rapidly decelerated by essentially decoupling it from the frame of the truck (the decoupling corresponding to the low force transfer to the frame) which frame continues to move forward with high momentum in this phase. An additional benefit of the low force transfer phase is that the additional travelling distance of the cabin in the following third phase of the collision can be made shorter which is an advantage since the mechanical means to provide for a controlled increased force transfer are more costly than means for a low force transfer between cabin and frame and become more costly the longer the travelling distance with high force transfer is that has to be provided. Fig. 5 shows behavior of a truck with a cabin frame connecting structure system that provides maximum safety for both contact injuries and deceleration injuries at a minimum of costs.

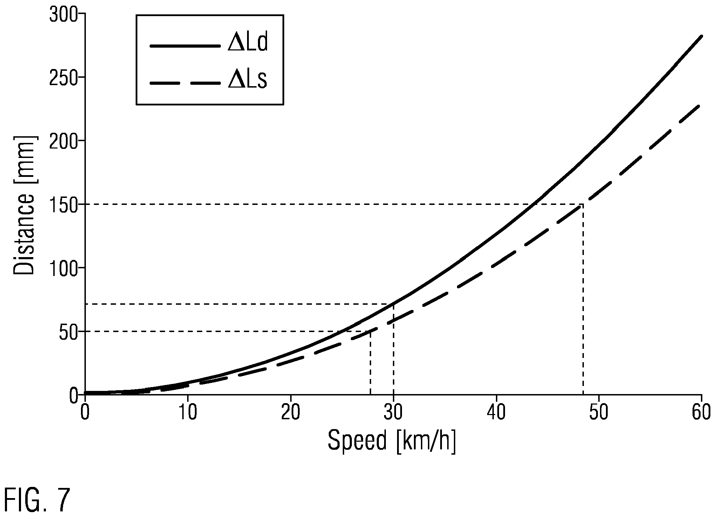

Figure 7 shows the cabin deformation between A and B pillar Δ*Ld* = *Ld*0 - *Ld*, and the backward sliding distance of the B pillar Δ*Ls* = *Ls* - *Ls*0 relative to the frame at point 1 in Fig. 5 (cabin and trailer have reached common speed) as a function of the initial speed of the truck when colliding with a trailer being at rest, and with the same parameters used as in Fig. 5 except that the initial speed of the truck is a variable. The typical acceptable cabin deformation is between 60 and 120 mm and this will be achieved at a targeted safe crash speed by a properly chosen "cabin front strength", i.e. the force level which causes permanent deformation of the cabin front which is determined by the design of the cabin front. The typical acceptable cabin deformation will always be limited since there are limitations on how far a driver can sit from the steering wheel or dashboard. This graph illustrates that cabin backward sliding distance is closely following or closely linked to cabin deformation, (this can also be shown with mathematical formulas), with backward sliding distance typically being a little bit lower than cabin deformation as a function of initial speed. To make a system with an optimal balance of reduced risk of contact injuries and deceleration injuries, this graph allows to determine the distance after which it is safe to increase the transfer force to a higher level. The design value of the starting point of the increased force transfer should always have some additional margin to the sliding length during the cabin deformation.

To study the robustness of the system the main parameters are cabin front deformation, force level, cabin mass and initial speed with trailer mass playing a less significant influence. Variations of these parameters and designed starting point of the increased force transfer indicate that a distance below 50 mm would require a high cabin front deformation force level and therefore a costly truck front structure to achieve such high cabin front strength. On the other hand sliding more than 150 mm will give a late start of the acceleration of the cabin and therefore a less effective and safe truck system. Late start of cabin acceleration may also require an unnecessary high and costly transfer force to achieve the safe cabin speed for the driver.

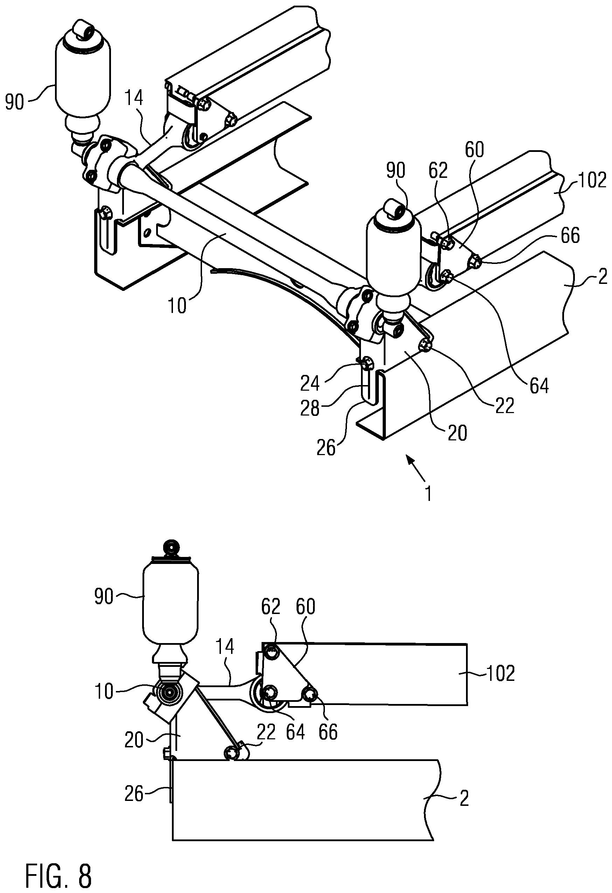

It should be noted that the first and second connector devices can be included in the same physical component (s), i.e. the same member can form part of the first and second connector devices. This will become apparent when considering the various embodiments in Figs. 8 to 22 in connection with the detailed description.

According to a preferred embodiment the first connecting device is arranged such that it permits backward movement of the cabin with low force transfer below 50% of the threshold force.

According to a further preferred embodiment the second connector device is arranged such that the controlled increase to an increased force transfer level between cabin and frame in the third phase of the collision is at a level above the threshold force.

In a preferred embodiment the first connecting device comprises a connecting member connected by first rotatable connecting means with respect to the cabin and connected by second rotatable connecting means with respect to the frame at a level vertically below the first connecting means. The connecting member is connected with respect to the cabin or to the frame with the further connection which is spaced apart from the first and second connecting means and which is arranged to have a predetermined breaking point such that the connection breaks when the force urging the cabin backward relative to the frame exceeding the threshold force. After break of the further connection the connecting member is free to pivot backward which moves the first connecting means vertically closer to and backwards with the respect to the second connecting means. This backward pivoting movement of the connecting member in the first connecting device is accompanied by a movement of the cabin backwards relative to the frame (and slightly downward) over the predetermined backward movement distance with a low force transfer between cabin and frame below 50% of the threshold force because the rotational movement of the connecting member is accompanied by rather low resistance forces for the rotational movement of the first and second connecting means. If for example the connecting member has initially a generally vertical orientation, with the first connecting means being disposed vertically on top of the second connecting means, the connecting member could be arranged to be able to rotate, after break of the further connection, by about 90° to a generally horizontal orientation; the predetermined backward movement distance would in this case be equal to the distance between the first and second connecting means of the connecting member.

In the above described preferred embodiment of a rotatable connecting member in the first connector device, wherein the rotation of the connecting member enables the cabin to move backwards with respect to the frame over the predetermined movement distance with a low force transfer or resistance force between cabin frame, the first and second connecting means can be bolts or shafts allowing the rotation, or alternatively be permanent connections which are of sufficiently reduced material strength such that they allow the rotational movement in the first and second connecting means by plastic deformation at the required low force level such that the sliding resistance or force transfer between cabin and frame in the second phase of the collision is at the defined low level below 50% of the threshold force.

In an alternative preferred embodiment the first connecting device comprises first and second slide connection elements which are connected to each other by a connection with a predetermined breaking point and which, after breaking of the connection with the predetermined breaking point when the force between cabin and frame exceeds the thresholds force, are slideable with respect to each other over a limited distance. The first slide connection element is connected with respect to the cabin and the second with respect to the frame, wherein the first and second sliding elements are oriented such that their relative sliding direction has a directional component in common with the backward movement direction of the cabin with respect to the frame in the second phase of the collision. The limited distance over which the first and second slide connection elements allow for sliding movement is arranged such that movement of the first and second slide connection element over the limited distance results in movement of the cabin over the predetermined backward moving distance of the B pillar of the cabin relative to the frame in the second phase of the collision, wherein the first and second sliding connection elements are arranged such that the total sliding resistance or force transfer between cabin and frame upon backward movement of the cabin relative to the frame is rather low and below 50% of the threshold force. After the relative movement of the first and second slide connection elements in the first connecting device when the limited distance is reached further backward movement is blocked and the second connector device is causing said increased force for transfer between cabin and frame in the third phase of the collision. The first and second sliding elements can for example be elements engaging each other and being moveable in a telescoping manner or can be inter-engaging rail elements which can be shifted with respect to each other over the limited distance.

In a preferred embodiment the second connector device is dimensioned and arranged such that the increased force transfer in the third phase of the collision is caused by progressive mechanical deformations of portions in the second connector device.

For this purpose the second connector device may comprise a bent arm which is arranged to become effective in the force transmission between cabin and frame after the first connecting device allowed for said predetermined backward movement of the cabin relative to the frame in the second phase of the collision. The bent arm is dimensioned and arranged such that it is progressively bent further in the third phase of the collision upon further backward movement of the cabin respect to the frame, wherein the progressive further bending causes the increased force transfer between cabin and frame below cabins strength in the third phase of the collision. The bent arm may for example have a central apex and two opposite end portion extending to a lower vertical level than the apex, which end portions are in force transmitting engagement in the connection between cabin and frame when the third phase of the collision starts such that the bent arm is further bent which moves its opposite end portions closer together to allow for further backward movement of the cabin with respect to the frame in the third phase of the collision. This further backward movement is accompanied, due to the bending of the bent arm, by an increased force transfer level between cabin and frame, wherein the bent arm is arranged and dimensioned such that its further bending is accompanied by a force transfer above threshold force and below cabin strength. There can be for example be two bent arms of identical dimensions and being arranged in a symmetrical manner on both sides in the second connector device between cabin and frame.

Alternatively the progressive mechanical deformation for generating the increased force transfer or sliding resistance in the third phase of the collision can be realized in the following manner. The second connector device comprises a connector fixed with a first portion with respect to one of cabin and frame, wherein the connector has a spaced part second portion received in an opening of an element fixed with respect to the other of the cabin and frame. The opening in the element is adjoined by a linear zone of weakened material thickness which is dimensioned and arranged such that the second portion of the connector in the third phase of the collision is pulled along the zone of weakened material thickness tearing it open or widening it in the third phase of the collision upon further backward movement of the cabin with respect to the frame, which mechanical deformation in the weakened material thickness zone provides the increased force transfer between cabin and frame below cabin strength in the third phase of the collision. The zone of weakened material thickness adjoining the opening can be a closed wall with reduced wall thickness which is then torn open when the second portion of the connector is pulled through. Alternatively, the zone of weakened material thickness may be a slit in the wall of the element which is widened due to mechanical deformation in the walls of the element when the second portion of the connector is pulled through the slit. The force needed to cause this progressive mechanical deformation can be adjusted by properly arranging the parameters of the zone of weakened material thickness.

In a further alternative embodiment the second connector device comprises a metal deformation structure which is fixed with respect to one of the cabin and the frame and which is capable of being shortened by crumbling or mechanical collapse upon force being exerted thereon. The second connector device further comprises a pressure exerting element coupled with respect to the other one of the cabin and the frame, which pressure exerting element is arranged to come into force transmitting engagement with the deformation structure after movement of the cabin over the predetermined backward movement distance in the second phase of the collision, whereupon the deformation structure is shortened to allow for further backward movement in the third phase of the collision under progressive deformation and shortening of the metal deformation structure resulting in the increased force transfer between cabin and frame above threshold force level and below cabin strength.

It is also possible to combine features of the above described embodiments of the second connector device to generate the increased force transfer or sliding resistance between cabin and frame by combining different deformation mechanisms as described above.

The invention will now further be described in connection with preferred embodiments in the drawings, in which:
Fig. 1 shows subsequent steps in a frontal collision of a truck impacting on a trailer at rest;
Fig. 2 schematically shows the front part of a truck on the left hand side before the collision and on the right hand side after the collision;
Fig. 3 is a graph showing the time dependence of the speed of various objects involved in a truck trailer collision for a prior art truck;
Fig. 4 is a graph showing the time dependence of the speed of various objects involved in a truck trailer collision for a truck being arranged to provide a constant increased force transfer or sliding resistance between cabin and frame;
Fig. 5 is a graph showing the time dependence of the speed of various objects involved in a truck trailer collision for a truck according to the present invention with low force transfer between cabin and frame in the second phase of the collision and increased force transfer in the third phase of the collision;
Fig. 6 shows the force transfer or sliding resistance between cabin and frame for a truck according to the present invention as a function of the distance of the backward movement of the cabin relative to the frame;
Fig. 7 shows the backward moving distance of the B pillar ΔLs and the cabin deformation between A and B pillar ΔLd as a function of the speed of the truck impacting on the trailer at rest;
Fig. 8 shows a perspective view and a side view of parts of a connecting structure of a cabin and a frame with a frame mounted anti-rollbar;
Fig. 9 shows a perspective view and a side view of parts of a connecting structure of a cabin and a frame with a cabin mounted anti-rollbar;
Fig. 10 shows a schematic side view of a truck with a cabin frame connecting structure according to the first embodiment, and details of the cabin frame connecting structure as a sequence illustrating movements in the connecting structure during the subsequent phases of the collision;
Fig. 11 shows a perspective view and a side view of parts of a cabin frame connecting structure according to a second embodiment;
Fig. 12 shows a perspective view and a side view of parts of a cabin frame connecting structure according to a third embodiment;
Fig. 13 shows a schematic side view of a truck with a cabin frame connecting structure according to the third embodiment, and details of the cabin frame connecting structure as a sequence illustrating movements in the connecting structure during the subsequent phases of the collision;
Fig. 14 shows details of the cabin frame connecting structure as a sequence illustrating movements in the connecting structure during the subsequent phases of the collision for a fourth embodiment;
Fig. 15 shows a perspective view of parts of a cabin frame connecting structure according to a fifth embodiment;
Fig. 16 shows a schematic side view of a truck with a cabin frame connecting structure according to a fifth embodiment, and details of the cabin frame connecting structure as a sequence illustrating movements in the connecting structure during the subsequent phases of the collision;
Fig. 17 shows a schematic side view of a truck with a cabin frame connecting structure according to a fifth embodiment, and details of the cabin frame connecting structure as a sequence illustrating movements in the connecting structure during the subsequent phases of the collision;
Fig. 18 shows a perspective view of parts of a cabin frame connecting structure according to a sixth embodiment;
Fig. 19 shows a perspective view of parts of a cabin frame connecting structure according to the sixth embodiment and two side views showing the connecting structure at two subsequent points in time during a collision;
Fig. 20 shows a perspective view and a side view of parts of a cabin frame connecting structure according to a seventh embodiment;
Fig. 21 shows a schematic side views of details of the cabin frame connecting structure for the seventh embodiment as a sequence illustrating movements in the connecting structure during the subsequent phases of the collision; and
Fig. 22 shows a schematic side view of a truck with a cabin frame connecting structure according to a variant of the seventh embodiment, and details of the cabin frame connecting structure as a sequence illustrating movements in the connecting structure during the subsequent phases of the collision.

The present invention can be realized in both of the common configurations of a cabin mounting on the frame of a truck, which configurations are referred to here as "frame mounted anti-rollbar" and "cabin mounted anti-rollbar" indicating on which of the two the anti-rollbar is mounted. The invention would also work on constructions where the torsion element of the cabin suspension is made redundant, i.e. when active cabin suspension systems are introduced.

In Fig. 8 a perspective and a side view of parts of the connection structure between cabin and truck frame are shown which represent a frame mounted anti-rollbar configuration. In Fig. 8 parts of beams 2 of the frame 1 of the truck are shown. The anti-rollbar 10 is mounted and supported by two towers 20 which are fixed to the frame 1 (in this and the following Figs. generally only one of two components is provided with reference numerals if the second is symmetrically present on the opposite side). The anti-rollbar 10 carries at its two opposite ends two air suspension cylinders 90 which are connected to the cabin. Furthermore, lower beams 102 of the cabin are partly shown which are connected by arms 14 to the opposite ends of the anti-rollbar 10.

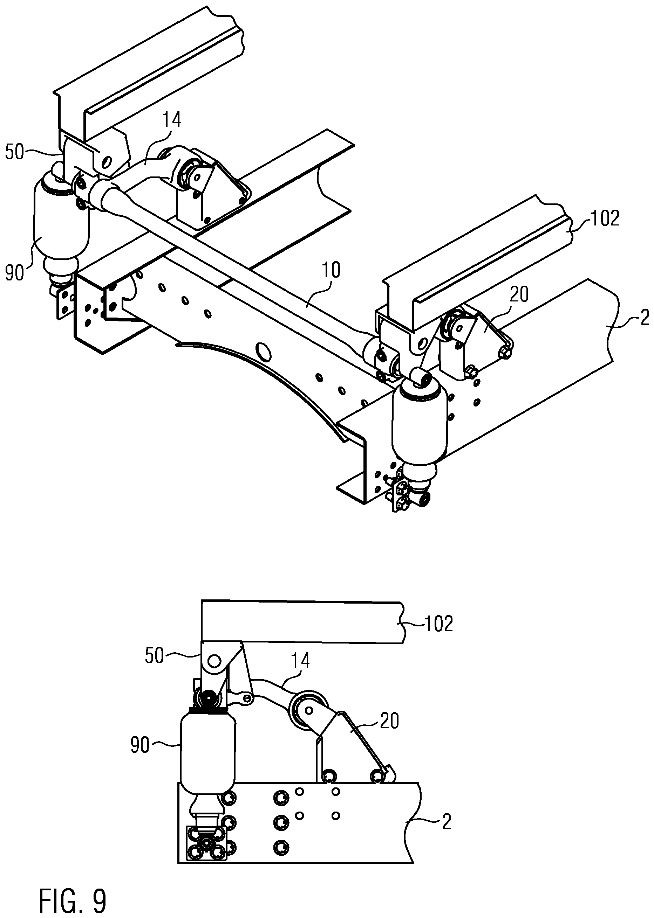

The second configuration, referred to as cabin mounted anti-rollbar, is shown in Fig. 9. Two opposite lower beams 102 of the cabin are illustrated which are coupled by two opposite connector devices 50 to the anti-rollbar 10. The anti-rollbar 10 rests on the two opposite air suspension cylinders 90 which in turn are mounted to the beams 2 of the frame of the truck.

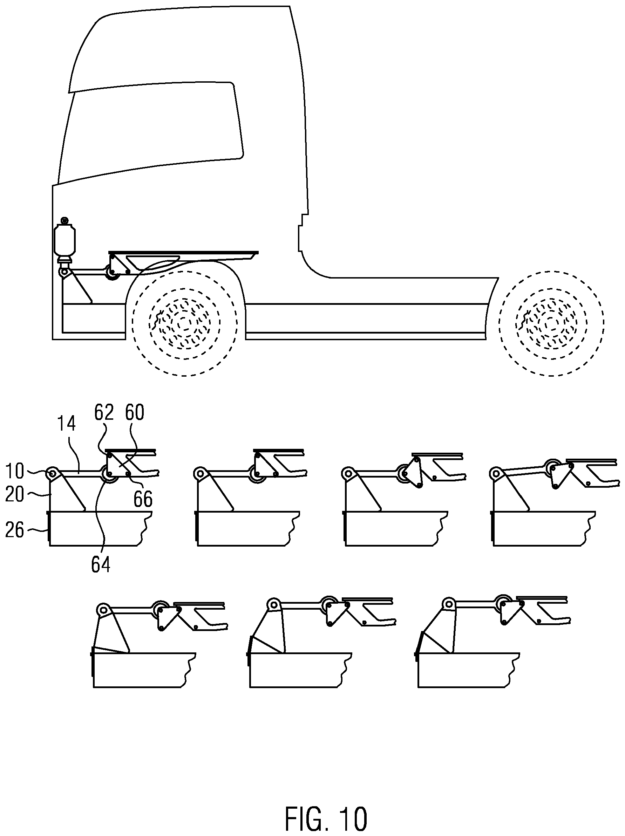

With reference to Fig. 8 and 10 a first embodiment of a frame mounted anti-rollbar configuration of the connection structure connecting cabin and frame will be described which allows to realize the three subsequent phases during a collision, namely first a release when a force above threshold force is acting between cabin and frame, a second phase of low force transfer and thereafter a controlled increase in the force transfer level in a third phase. As shown in Fig. 8 triangular brackets 60 are connecting the beams 102 of the cabin to the ends of two opposite arms 14 which are connected to the anti-rollbar 10 which in turn is mounted on the frame of the truck. Each bracket 60 is mounted by an upper bolt 62 to the beam 102 of the cabin, and by a lower bolt 64 to an end of one of the arms 14 connected to the anti-rollbar 10 which is mounted on the frame of the truck. The connections by the bolts 62 and 64 are arranged such that the bracket 60 can rotate about these bolts 62, 64 at a moderate friction level. There is a further pin 66 which connects each bracket 60 to its beam 102 of the frame. The bracket 60 is thus a connecting member which is on the one hand fixed with respect to the cabin (by upper bolts 62) and on the other hand fixed with respect to the frame 1 of the truck (by bolts 64, arms 14, anti-rollbar 10 and towers 20). Since in addition to the bolts 62 also the pins 66 are connecting the brackets 60 to the beams 102 of the cabin any rotation of the bracket 60 is prevented. The pins 66 are designed such that when the force on the cabin (acting through the beams 102 also on the pins 66) relative to the frame exceeds the threshold force, the pins 66 are designed to break, i.e. the pins have a predetermined breaking point.

Breaking of the pins 66 when the threshold force is reached leads to a release of the cabin with respect to the frame of the truck. This is schematically illustrated in the sequence of movement stages of the connecting structure in the lower part of Fig. 10. In the first state in the upper row of the two sequence rows the pin 66 still connects the bracket 60 to the beam 102 of the cabin at a second point (besides bolt 62) so that bracket 60 is fixed. In the second state of the upper row the threshold force is reached in the first phase of the collision and pins 66 break. Thereafter brackets 60 are free to rotate about bolts 62 and 64, as shown in the third and fourth state in the upper row in Fig. 10. This rotation of the brackets 66 corresponds to a backward movement of the cabin relative to the frame of the truck, wherein the rotation about bolts 62, 64 is accompanied with little friction such that backward movement of the cabin backwards is permitted with very low sliding resistance, or in other words with a low force transfer between cabin and frame in the second phase of the collision.

The brackets 60 of the first embodiment shown in Fig. 10 rotate about 90° in the second phase of the collision, and then the end of the second phase of the collision is reached on the right hand side of the upper row in Fig. 10. It can be seen that the predetermined backward movement distance corresponds to the distance between the bolts 62 and 64, i.e. the predetermined backward moving distance of the cabin can be set in this embodiment by properly designing the size of the brackets 60 and the distance of its connecting bolts 62, 42. The brackets 60 are part of the first connector device.

In the embodiment illustrated in Fig. 8 and 10 the second connector device includes towers 20 which are connected with respect to the cabin and with respect to the frame of the truck. The towers 20 are mounted by bolts 22 to the beams 2 of the frame of the truck. This connection is designed such that the towers 20 can rotate about bolts22. However, there are further bolts 24 connecting the towers 20 to the beams 2 of the frame. These bolts 24 are located such that they are disposed adjacent a zone 28 of weakened material strength in an extension 26 of tower 20 of sheet metal. The linear zone 28 of weakened material strength can for example be a slit of smaller width in the metal sheet extension 26 than the diameter of the bolt 24. The zones 28 of weakened material strength are designed such that the connection of the towers 20 to the beams 2 of the frame is strong enough such that the towers 20 are kept fixed in the second phase of the collision during which the low resistance rotation of the brackets 60 allows for backward movement of the cabin with respect to the frame at low force transfer. At the end of the low force second collision phase which is reached in Fig. 10 in the state on the right hand side of the upper row, further backward movement of the cabin with respect to the frame is only possible if the second connector device, here in the form of the towers 20, allows such movement. This moving capability of the towers 20 is achieved in this embodiment by the bolts 22 which allow rotation of the towers 20 backwards with respect to the beams 2 of the frame, and by the bolts 24 and the adjoining zones 28 of weakened material strength in the extensions 26 of the towers 20. However, this further movement in the third phase of the collision is only possibly at a higher force transfer level or sliding resistance of the cabin with respect to the frame since extra force is needed to pull the zones 28 of weakened material strength along the bolts 24 to allow the towers to pivot about bolts 22. The movement of the slits or zones 28 of weakened material thickness along the bolts is accompanied by mechanical deformation in the extensions 26 of the towers 20, when the slits in the metal sheet extensions 26 are widened when being pulled over the bolts 24. By properly arranging the material thickness of the extensions 26 and the width of the slits 28, the force needed to pivot the towers 20 in the third phase of collision can be set in a rather precise manner. Accordingly, the force transfer level in the third phase of the collision can be set by properly designing the extensions 26 and the zones 28 of weakened material strength therein. In this manner towers 20 allow backward pivoting of the towers 20 as shown in the lower row in Fig. 10 at an increased force transfer level between cabin and frame.

The zone of weakened material strength can alternatively be a strip of reduced wall thickness in the sheet metal of the extension 26 of the towers 20. In this case the zone of reduced material thickness is pulled along bolt 24 in the third phase of the collision, thereby tearing open the strip of reduced wall thickness. By properly designing the strip of reduced wall thickness the force transfer level in the third phase of the collision can rather precisely be achieved at the desired level.

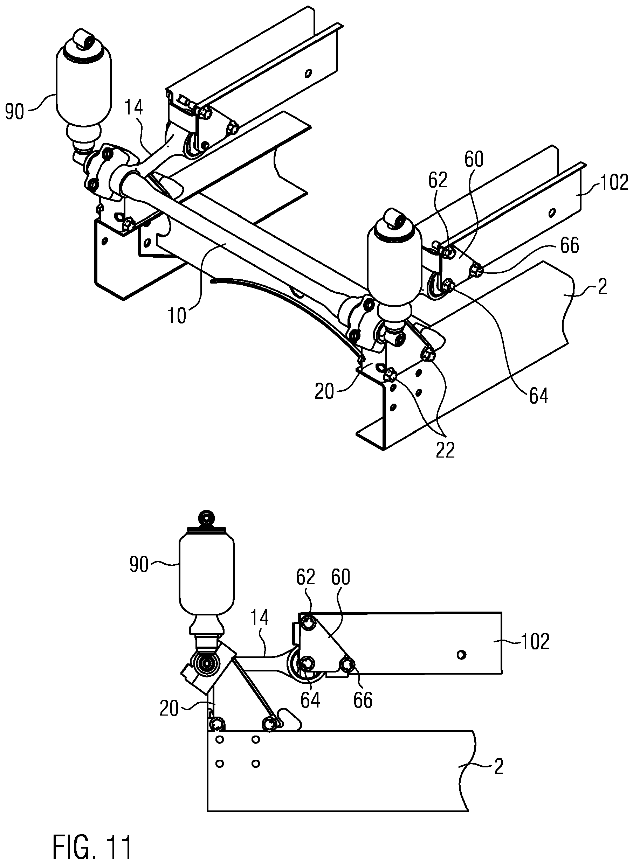

Fig. 11 shows a second embodiment of the connecting structure between cabin and frame of the truck. As in the first embodiment a frame mounted anti-rollbar configuration is shown. The design of the first connector device is identical to the first embodiment so that regarding the design and operation of the brackets 60 reference is made to the corresponding description of the first embodiment. In this case the second connector device comprises towers 20. The towers 20 are hollow and are formed of sheet metal walls. Each tower is firmly attached by two bolts 22 to its respective beam 2 of the frame 1. In this case the movement in the third phase of the collision with increased force transfer is not enabled by pivoting of the towers 20 as in the first embodiment but by progressive deformation and eventual collapse of the towers. For this purpose the walls of metal sheet are formed with openings and folding lines which allow the entire tower to buckle and to be bent backwards which bending backwards is accompanied by deformation and collapse of the wall structure. By properly designing the wall structure of the towers 20 the force needed to bend the two towers 20 backwards under mechanical deformation can be set at a desired level to achieve the increased force transfer in the third phase of the collision. The towers are buckling for example at a total force of 200 kN between cabin and frame.

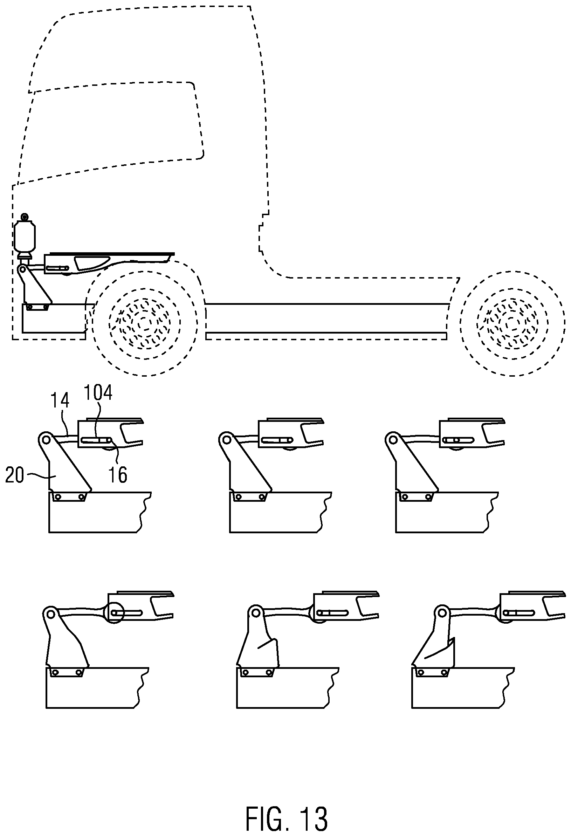

The second phase of the collision is shown in the upper of the two rows of the sequence shown in Fig. 10. For the third phase of the collision reference is made to the lower row in Fig. 13.

In the first and second embodiments the brackets 60 can also be connected to the cabin beam 102 and the arm 14 connected to the beam 2 of the frame by other means than bolts 62, 64, for example by welded connections. The welded connection areas are then arranged in such a manner that they allow the rotation of the brackets shown in the upper row of Fig. 10 by plastic deformation of the material in the connection areas.

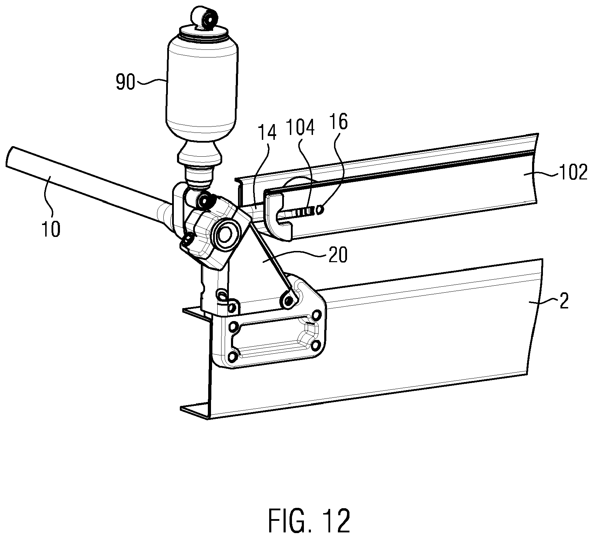

Fig. 12 shows a third embodiment of parts of the connecting structure between cabin and frame of the truck. Again a frame mounted anti-rollbar configuration is shown. The mounting of the anti-rollbar 10 is identical to the second embodiment, namely by towers 20 which are fixed by bolts to the beams 2 of the frame of the truck. At each end of the anti-rollbar 10 an arm 14 is mounted which extends horizontally backwards into the hollow profile of the beams 102. At its end remote from the anti-rollbar 10 each arm 14 has an end piece which is slidable within the hollow profile of the beam 102. Each end piece is provided with a pin 16 which is extending through a hole in the outer wall of the hollow beam 102 to the exterior. Next to the hole through which the pin 16 extends a horizontal slot 104 is provided in the outer wall of the hollow beam 102. Between the hole and the adjacent end of the slot 104 a narrow strip of the outer wall of beam 102 is left. The width of this trip is designed such that it will break when the threshold force between cabin and frame is reached. When the narrow strip between hole and slot 104 breaks in each of the two beams 102, the cabin is released from the frame and can move horizontally backward while the end pieces of the levers 14 are sliding through the hollow beams 102 at low friction to provide the second phase of the collision with low force transfer.

This is illustrated in two rows of sequences in the lower part of Fig. 13. In the state on the left hand side in the upper row this state before the collision is shown. In the middle of the upper row the collision has started and the force between cabin and frame is about to reach the threshold force so that the narrow strips between the holes and the slots 104 are beginning to break. Once the strip between the hole and horizontal slot 104 is broken in each of the beams 102 the beams 102 can move backwards with the pin sliding along the slot 104 as shown on the right hand side in the upper row of Fig. 13. When the pin reaches the opposite end of the slot 104, as shown on the left hand side of the lower row in Fig. 13, the second phase of the collision is terminated and no further backward movement of the cabin with low force transfer is possible.

In this embodiment the arms 14 extend with their end pieces into the hollow profile of the beams 102 and the pins 16 and the slots 104 form part of the first connector device which allows a telescoping movement of the beams 102 of the cabin with respect to the arms 14 fixed to the frame. The predetermined backward movement distance is equal to the horizontal length of the slots 104.

In the third phase of the collision the increased force transfer between cabin and frame is generated in the same manner as in the second embodiment, i.e. the towers 20 are buckling and portions of their walls collapsing, wherein the strength of the towers is designed such that the desired force transfer level is achieved by the force needed for the deformation of the towers 20.

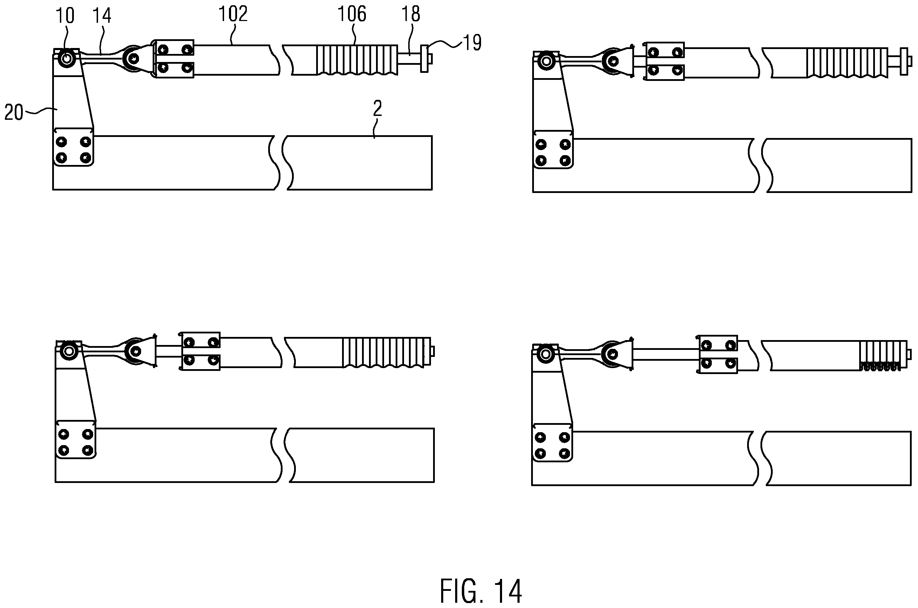

Fig. 14 schematically illustrates a fourth embodiment of parts of the connecting structure between cabin and frame of the truck. Again, a frame mounted anti-rollbar configuration is shown in which the anti-rollbar is supported by two towers 20 at its opposite ends, the towers 20 being fixed to beams 2 of the frame of the truck. Similar as in the previous embodiments two arms 14 are connected to the anti-rollbar at its opposete ends and extend horizontally backwards. On each side of the truck a hollow beam 102 of the cabin is present which has a head piece connected to the end of the arm 14 opposite to the anti-rollbar. Within the hollow beam 102 a rod 18 extends which is likewise coupled to the arm 14. The hollow beam 102 has a crumbling zone 106 at its end opposite to the head piece connected to the arm 14. The rod 18 carries an end disk 19 at its remote end, wherein there is a gap between the outer end of the crumbling zone 106 and the end disk 19 in the initial state. This initial state is shown on the left hand side in the upper part of Fig. 14.

The head piece of the hollow beam 102 of the cabin is connected to the main piece of the beam 102 by a connection having a predetermined breaking point. The predetermined breaking points are designed such that they break when the threshold force between cabin and frame is reached. After this release the main piece of the beam 102 can slide with little resistance along the rod 18, as illustrated on the right hand side in the upper part of Fig. 14.

When the cabin has moved backward in the second phase of the collision so that the predetermined backward movement distance is reached the outer end of the crumbling zone 106 contacts the end disk 19 of the rod 18 which terminates the low force transfer phase, as illustrated on the left hand side in the lower part of Fig. 14. In the following third phase of the collision further backward movement of the beams 102 of the cabin is only possible by deforming and shortening the crumbling zone 106, as illustrated in the lower part of Fig. 14 on the right hand side, which causes the increased force transfer level.

In this embodiment the rod 18 and the hollow beam 102 form part of the first connector device. After release of the predetermined breaking point the main piece of the beam 102 can move backward in a telescoping manner on the rod 18 with low force transfer between the hollow beam 102 and the rod 18. The predetermined backward movement distance with low force transfer is determined by the width of the gap between the outer end of the crumbling zone 106 of the beam 102 and the end disk 19 of the rod 18 in the initial state. In this embodiment the hollow beams 102 on each side of the cabin form with their crumbling zones 106 also part of the second connector device which in the third phase of the collision generates the desired increased force transfer level upon further backward movement of the cabin with respect to the frame. The end section of the hollow beams 102 forming the crumbling zones 106 can be designed that the wall structures of the crumbling zone behave like a concertina, wherein the wall structures are arranged such that this concertina-like shortening requires a force such that in total the desired increased force transfer level is reached in the third phase of the collision.

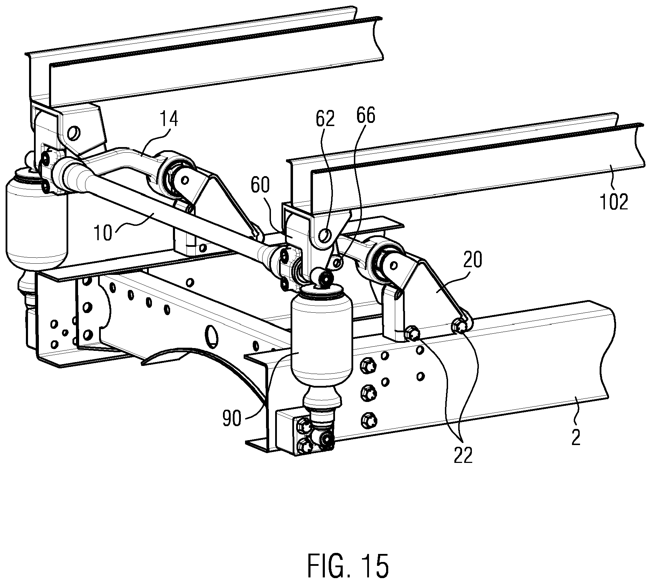

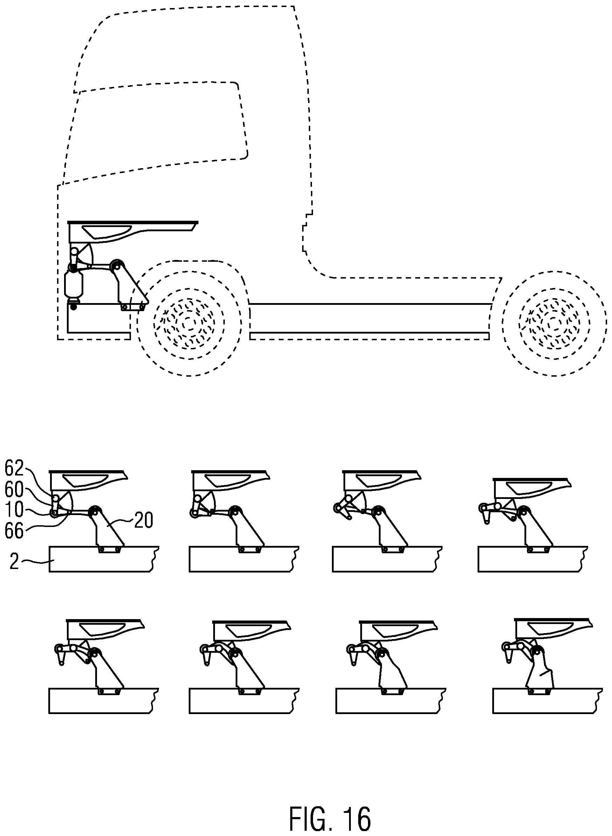

Fig. 15 shows a fifth embodiment of parts of the connecting structure between cabin and frame of the truck. This embodiment shows a cabin mounted anti-rollbar configuration in which the anti-rollbar 10 is connected to brackets 60 at its opposite ends which are in turn connected by bolts 62 to the beams 102 of the cabin. The brackets 60 are, besides the connections to the cabin beams 102 and to the anti-rollbar 10 which are both rotatable connections, connected by further bolts or pins with respect to the frame. In the initial state when each of the brackets 60 is fixed at three points the brackets 60 are fixed in the initial state, and accordingly also cabin and frame are in fixed relationship. The connections at pins 66 are again connections with predetermined breaking point which are designed such that the pins 66 of the brackets 60 break when the threshold force between cabin and frame is reached. Thereafter the brackets 60 are free to rotate about the anti-rollbar axis which moves the pins 62 backwards and essentially to the horizontal level of the anti-rollbar 10. The sequence of movements is illustrated in the upper row in Fig. 16. This rotation of the brackets 60 is accompanied by a backward (and a slight downward) movement which takes place with low force transfer between cabin and frame because the brackets 60 are arranged such that they can rotate with low friction about the bolts. The rotation with low force transfer between cabin and frame ends after a turn of about 90° when the upper bolts 62 of the brackets 60 reach the same horizontal level as the anti-rollbar. This is illustrated in the first view of the lower row of Fig. 16. The backward movement distance is in this embodiment determined by the length of the bracket 60, more precisely by the distance of the upper bolts 62 from the axis of the anti-rollbar about which the brackets pivot.

In this embodiment the increased force transfer in the third phase of the collision is caused by arms 14. As can be seen in Fig. 15 these arms 14 are from the very beginning formed as bent arm having a bent portion in the middle. When the second phase of the collision ends after a 90° rotation of the brackets 60 (see last view in the upper row of Fig. 16) further force transfer between cabin and frame is transmitted from the beams 102 of the cabin, through brackets 60, anti-rollbar 10 and further through the bent arms 14 to the towers 20 that are fixed to the frame. In the third phase of the collision further backward movement of the cabin with respect to the frame can continue under deformation of the bent arms 14 which bend further about their initially bent portion. The strength of the bent arms 14 is designed such that the bending of the bent arms 14 requires the desired increased force transfer level in the third phase of the collision.

In this embodiment the brackets 60 are connecting members which are on the one hand connected with respect to the cabin (by bolts 62) and on the other hand connected with respect to the frame (namely by the connection of each bracket to one of the ends of the anti-rollbar 10, via the arms 14 and towers 20 to the beams 2 of the frame). Each bracket 60 thus forms a connecting member with upper connecting means (bolts 62) with respect to the cabin and lower connecting means with respect to the frame (connection on the anti-rollbar 10 which is connected by arms 14 and towers 22 to the beams 2 of the frame). These upper and lower connections means of the connecting member allow for rotation such that the rotation of the connecting member provides the low force transfer movement of the cabin with respect to the frame.

The third phase of the collision with the increased force transfer of this embodiment is shown in the lower row of Fig. 16, wherein the towers are, as in the second and third embodiment, designed to be able to buckle and bend backward under sufficient force such that their bending backward in the third phase of the collision provides for the desired increased force transfer level.

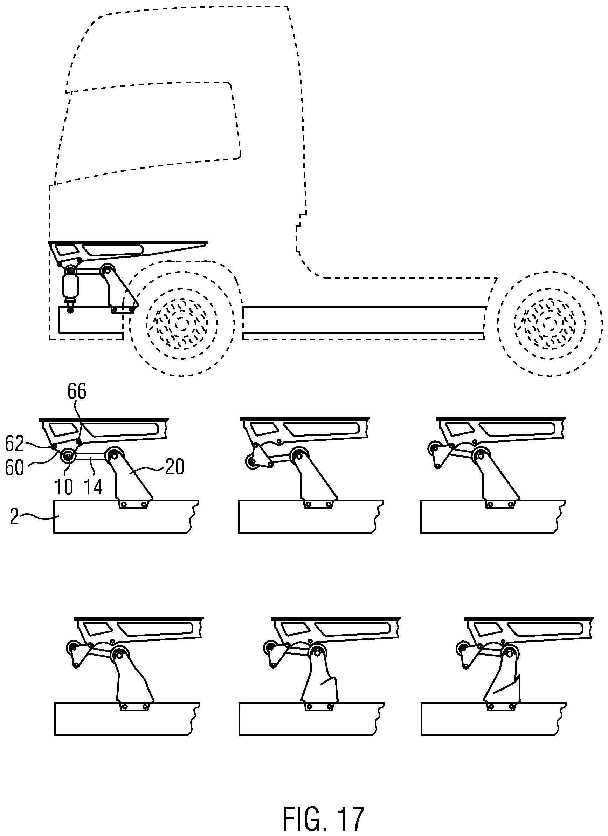

Fig. 17 illustrates a variant of the fifth embodiment in Fig. 16. The bracket 60 has a triangular shape, and the bolts 62 and pins 66 are essentially at the same horizontal level in the initial state, wherein bolts 62 are disposed slightly in front of the anti-rollbar 10. After breaking pins 66 brackets 60 rotate about the axis of anti-rollbar 10 until the bolts 62 are essentially on the same horizontal level as the turning axis about which the brackets 60 pivot (see left hand side in the upper row of Fig. 17). In this case the rotation is about 135° and the predetermined backward moving distance corresponds to the distance between the bolts 66 and the axis of the anti-rollbar 10 plus half of the base length of the bracket 60 between bolts 62 and pins 66.

The third phase of the collision takes place under buckling and bending of the towers 20 as described before.

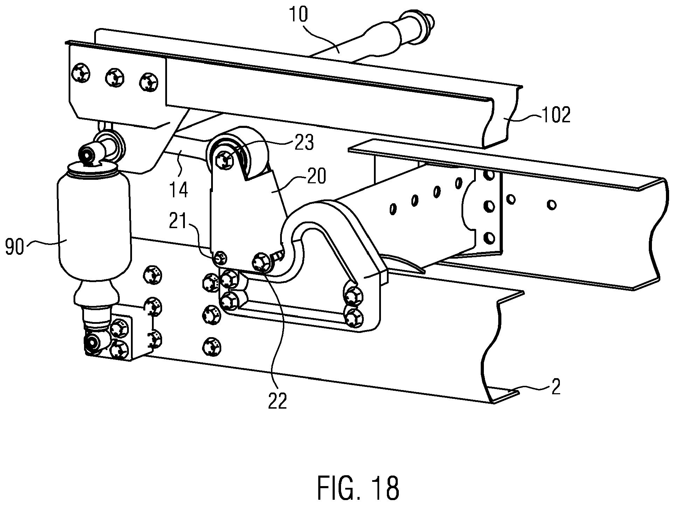

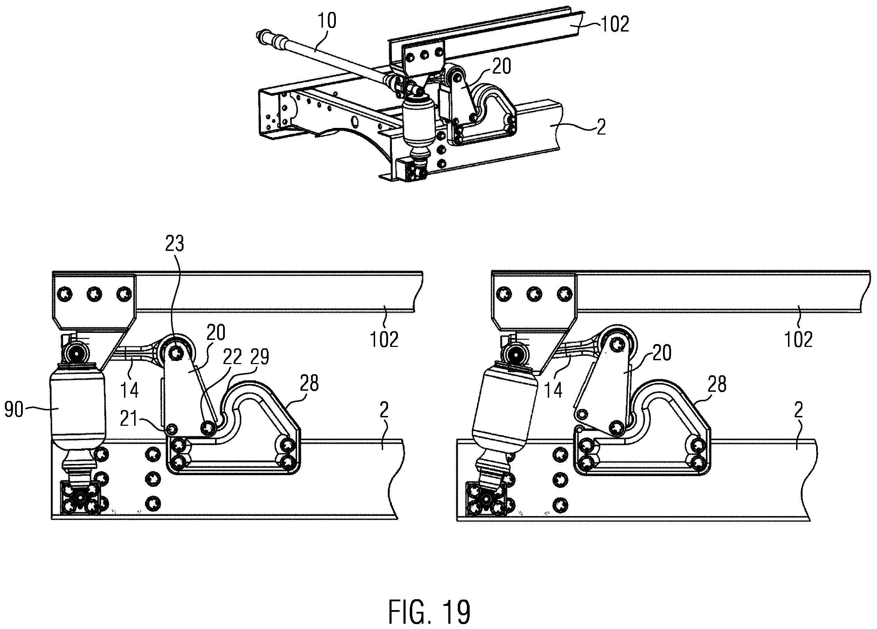

Figs. 18 and 19 show a sixth embodiment, wherein a cabin mounted anti-rollbar configuration is shown. The two opposite ends of the anti-rollbar 10 are mounted on the beams 102 of the cabin by opposite brackets. At each end of the anti-rollbar 10 an arm 14 is mounted, the opposite end of which is supported by a tower 20 fixed to the beam 2 of the frame of the truck. Each tower 20 is connected by a bolt 22 to the associated beam and by a bolt 23 to the associates arm 14, respectively. In addition, a pin 21 is connecting each tower 20 to the associated beam 2. The connections by bolts 22 and 23 are arranged such that they allow rotation about the respective bolt axes. Pins 21 are connection components with predetermined breaking point, wherein the pins 21 are arranged such that they break when the force between cabin and frame exceeds the threshold force. The force on the cabin is transmitted via beams 102 and the brackets connected to the arms 14 to the towers 20.

As shown in the lower part of Fig. 19, when pins 21 break towers 20 pivot backwards, wherein this rotation is accompanied with low friction and thus establishes the second phase of the collision with low force transfer between cabin and frame. A counter bearing component 28 is mounted to the beam 2 on each side of the truck frame. The counter bearing component 28 presents a rounded counter bearing surface 29. At the end of the second phase of the collision a rear surface of the tower 20 contacts the rounded counter bearing surface 29 of the counter bearing component 28, as shown on the right hand side in the lower part of Fig. 19. At this point counter bearing component 28 obstructs and blocks further backward rotation of the tower 20.

In this embodiment tower 20 is a connecting member connected with respect to the frame 2 (by bolts 22), and connected with respect to the cabin by bolts 23 (via arms 14, brackets and cabin beams 102). The bolts 22, 23 are first and second connections means which allow for rotation of the connecting member. The towers 20 are arranged to allow backward movement of the cabin with respect to the frame over a predetermined backward movement distance with low force transfer between cabin and frame by rotation of the towers 20. The predetermined backward movement distance is determined by the gap between the rear surface of the towers 20 and the opposing counter bearing surface 29 of the counter bearing components 28 in the initial state.

After the end of the second phase of the collision, when rear surfaces of the towers 20 contact the counter bearing surfaces 29 of the counter bearing components 28, as shown on the right hand side in the lower part of Fig. 19, the third phase of the collision starts. In this third phase of the collision further backward movement of the cabin respect to the frame is made possible by buckling of the towers 20 and bending over the rounded counter bearing surface 29. For this purpose the towers 20 are made as hollow components of sheet metal in such a manner that they buckle and bend at a predetermined force exerted by the cabin via the arms 14 on the towers 20. This predetermined force needed for bending the towers 20 over the rounded counter bearing surfaces 29 is arranged such that the desired increased force transfer level is achieved in the third phase of the collision.

It should be noted that in this embodiment the towers 20 are part of the first connector device in the second phase of the collision when the towers rotate backwards with low force transfer between cabin and frame. In the third phase of the collision the towers 20 form part of the second connector device when they abut against the counter bearing surface 29 of the counter bearing component 28 and when they are bending backward under high force transfer between cabin and frame in the third phase of the collision. In this embodiment the same physical components, namely towers 20, form part of the first and the second connector device.

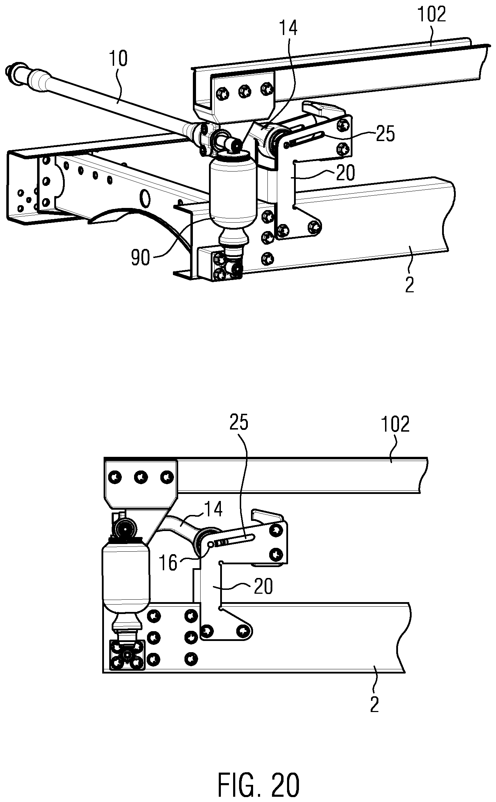

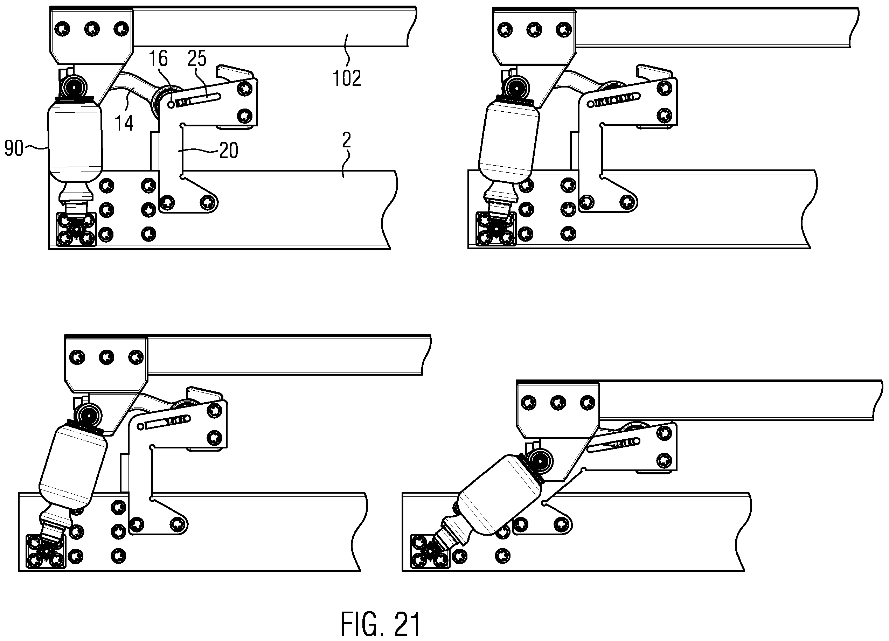

Figs. 20 and 21 illustrate a seventh embodiment, wherein a cabin mounted anti-rollbar configuration is shown in a perspective view and in a side view in Fig. 20. Brackets mounted on the beams 102 of the cabin are mounted to both ends of anti-rollbar 10. The anti-rollbar 10 is in addition connected by arms 14 to towers 20 which are fixed to the beams 2 on opposite sides of the truck frame. At the ends opposite to the anti-rollbar 10 the arms are provided with pins 16 which are received in a hole in the outer wall of the towers 20. Elongated slots 25 are disposed adjacent to the holes in the outer wall of the towers 20 such that a narrow strip of the outer wall remains between the holes and elongated slots 25. The strength of these narrow strips between holes and elongated slots 25 is arranged such that the narrow strips break when the force between cabin and frame exceeds the threshold force.

After breaking of the narrow strips the pins 16 of the arms 14 can slide along the elongated slots 25 which is illustrated on the right hand side in the upper part of Fig. 21. Once the pins 16 reach the ends of the elongated slots 25 opposite to the holes the second phase of the collision with low force transfer is completed. This state is shown on the left hand side in the lower part of Fig. 21.

In the following third phase of the collision the towers 20 transfer the force from the cabin to the frame, wherein the towers 20 are arranged such that they are able to bend backward at a predetermined force level under mechanical deformation. For this purpose the towers 20 may comprise notches which are arranged such that portions of the towers around the notches bend under deformation at a predetermined force level to provide the increased force transfer level in the third phase of the collision.

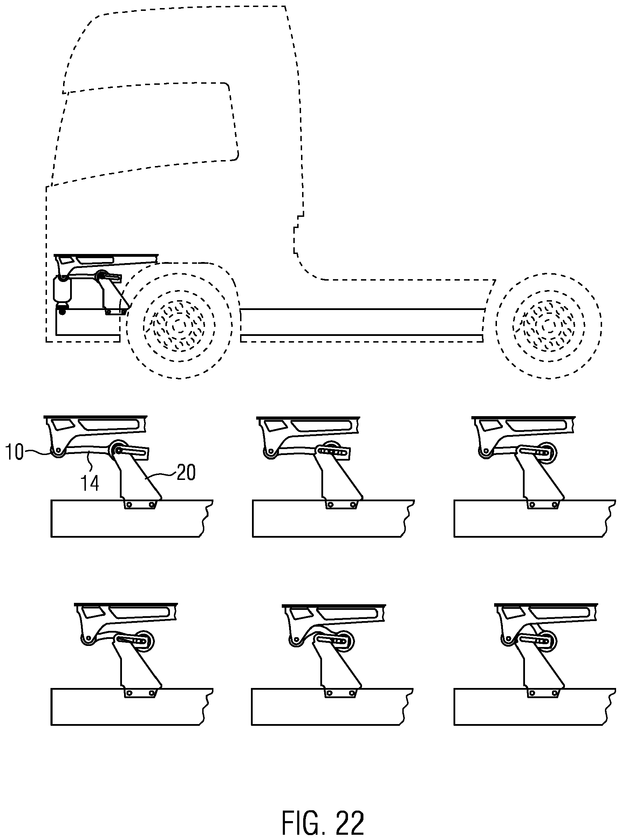

Fig. 22 shows a variant of the seventh embodiment of Figs. 20 and 21. Again, the first connector device includes a pin at the end piece of arms 14 connected to the anti-rollbar 10, the pins being received in a hole in the outer wall of the towers 20, the holes being disposed adjacent elongated slots in the outer wall of the towers such that the pins, after breaking of narrow material strips between the holes and the elongated slots, slide along the elongated slot to provide the second phase of the collision, as illustrated in the sequence in the upper row in the lower part of 22. But different from the embodiment of Figs. 20 and 21, in this variant the arms 14 are arranged such that they bend when the increased force transfer level in the third phase of the collision is to be caused, wherein the arms 14 are designed such that their bending requires a force which generates the desired increased force transfer level. This progressive bending of the arms in the third phase of the collision is shown in the sequence in the lower row of Fig. 22. In this embodiment the arms 14 are part of the first connector device (together with the pins at their end pieces which are received in the holes next to the elongated slots) as well as of the second connector device (providing increased force transfer when the cabin slides further backward under bending of arms 14).

## Claims

1. A cab over engine truck having a frame and a cabin mounted on the frame, said cabin having an A pillar and a B pillar in longitudinal direction of the cabin behind the A pillar, said cabin having a cabin strength defined as the force level above which a force acting on the A pillar in the direction of the B pillar causes the A pillar to move closer to the B pillar by permanent cabin deformation, said cabin being mounted to the frame by a connecting structure having a first connector device which is arranged such that, when the cabin impacts on an obstacle in case of a frontal collision, a break occurs in the first connector device when a threshold force between the cabin and the frame is exceeded in a first phase of the collision, and is further arranged such that after the break the first connector device allows for backward movement of the cabin relative to the frame with a low force transfer between cabin and frame below the threshold force for a predetermined backward movement distance of the B pillar relative to the frame in a second phase of the collision, wherein in the connecting structure a second connector device (20; 106; 14) is provided which is arranged such that it causes in a third phase subsequent to the second phase of the collision an increased force transfer between cabin and frame, **characterized in that**
the first connecting device (60, 66; 14, 104; 102, 18, 19; 14, 25) is further arranged such that it permits said backward movement of the cabin with low force transfer below the threshold force to the frame such that said predetermined backward movement distance of the B pillar of the cabin relative to the frame in the second phase of the collision is in the range 50 to 150 mm,
and **in that** the second connector device (20; 106; 14) is arranged such that it causes in the third phase subsequent to the second phase of the collision the increased force transfer between cabin and frame to be at least 30% of the threshold force above the lowest force transfer level in the second phase upon further backward movement of the cabin relative to the frame beyond the predetermined backward movement distance, wherein the second connector device is further arranged such that the increased force transfer is at a level below the cabin strength.

2. The truck according to claim 1, **characterized in that** the first connecting device (60, 66; 14, 104; 102, 18, 19; 14, 25) is further arranged such that low force transfer below the threshold force in the second phase of the collision is below the level of 50% of the threshold force.

3. The truck according to claim 1 or 2, **characterized in that** the second connector device (20; 106; 14) is arranged such that it causes in the third phase subsequent to the second phase of the collision an increased force transfer between cabin and frame above the threshold force above upon further backward movement of the cabin relative to the frame beyond the predetermined backward movement distance.

4. The truck according to any preceding claim, **characterized in that** the first connecting device comprises a connecting member (60) connected by first rotatable connecting means (62) with respect to the cabin and connected by second rotatable connecting means (64) with respect to the frame at a level vertically below the first connecting means, and that the connecting member is connected with respect to the cabin or to the frame with a further connection (66) which is spaced apart from the first and second connecting means and which is arranged to have a predetermined breaking point such that the connection breaks upon the force between the cabin and the frame exceeding the threshold force, whereafter the connecting member (60) is free to pivot backward, bringing the first connecting means vertically closer to and backwards with respect to the second connecting means, to provide the predetermined backward movement distance of the B pillar of the cabin relative to the frame with low force transfer between cabin and frame below 50% of the threshold force in the second phase of the collision by rotation of the connecting member.

5. The truck according to claim 4, **characterized in that** the first and/or second connecting means (62, 64) include a bolt allowing rotation of the connecting member or a permanent connection allowing rotation by plastic deformation of material in the area of the permanent connection, wherein the connecting member (60) and the first and second connection means (62, 64) are dimensioned and arranged such that rotation of the connecting member (60) during backward movement of the cabin relative to the frame is taking place with a low force transfer below 50% of the threshold force over said predetermined backwards moving distance in the second phase of the collision.

6. The truck according to any of claims 1 to 3, **characterized in that** the first connecting device comprises first and second slide connection elements (102, 18) which are connected to each other by a connection with a predetermined breaking point and which, after breaking of the connection with predetermined breaking point when the force between cabin and frame exceeds the threshold force, are slidable with respect to each other over a limited distance, the first slide connection element being connected with respect to the cabin and the second with respect to the frame, wherein the first and second sliding elements are oriented such that their relative sliding direction has a directional component in common with the backwards movement direction of the cabin in the second phase of the collision, wherein the limited distance of sliding between first and second slide element is arranged such that movement of the slide connection elements over the limited distance results in said predetermined backward movement distance of the B pillar of the cabin relative to the frame in the second phase of the collision, whereafter further backward movement is blocked and the second connector device is causing said increased force transfer between cabin and frame in the third phase of the collision.

7. The truck according to any of the preceding claims, **characterized in that** the second connector device (20; 106; 14) is dimensioned and arranged such that the increased force transfer is caused by progressive mechanical deformation of portions in the second connector device.

8. The truck according to claim 7, **characterized in that** the second connector device comprises a bent arm (14) which is arranged to become effective in the force transmission between cabin and frame after the first connecting device allowed for said predetermined backward movement of the cabin relative to the frame in the second phase of the collision, wherein the bent arm is dimensioned and arranged such that it is progressively further bent in the third phase of the collision upon further backward movement of the cabin with respect to the frame with the progressive further bending causing the increased force transfer between cabin and frame below cabin strength in the third phase of the collision.

9. The truck according to claim 7, **characterized in that** the second connector device (20) comprises a connector (26) fixed with a first portion with respect to one of cabin and frame and having a spaced apart second portion received in an opening of an element fixed with respect to the other of the cabin and frame, which opening is adjoined by a linear zone (28) of weakened material thickness which is dimensioned and arranged such that the second portion of the connector is pulled along the zone of weakened material thickness open tearing it open or widening it in the third phase of the collision upon further backward movement of the cabin with respect to the frame to provide the increased force transfer between cabin and frame below cabin strength in the third phase of the collision.

10. The truck according to claim 7, **characterized in that** the second connector device (162) comprises a metal deformation structure (106) which fixed with respect to one of the cabin and the frame and which capable of being shortened by crumbling or mechanical collapse upon force being exerted thereon, and a pressure exerting element coupled with respect to the other one of the cabin and the frame, which pressure exerting element is arranged to come into force transmitting engagement with the deformation structure at the end of backward movement of the cabin with respect to the frame over the predetermined backward moving distance in the second phase of the collision to shorten the deformation structure (106) to allow for further backward movement in the third phase of the collision under progressive deformation and shortening of the metal deformation structure with providing the increased force transfer between cabin and frame below cabin strength.

## Patentansprüche

1. Frontlenker-Lastkraftwagen mit einem Rahmen und einem auf dem Rahmen montierten Fahrerhaus, wobei das Fahrerhaus eine A-Säule und eine in Längsrichtung des Fahrerhauses hinter der A-Säule liegende B-Säule hat, wobei das Fahrerhaus eine Fahrerhausfestigkeit hat, die definiert ist als das Kraftniveau, oberhalb dessen eine auf die A-Säule in Richtung der B-Säule wirkende Kraft bewirkt, dass die A-Säule sich infolge permanenter Deformation des Fahrerhauses auf die B-Säule zu bewegt, wobei das Fahrerhaus an dem Rahmen durch eine Verbindungsstruktur montiert ist, die eine erste Verbindungsvorrichtung aufweist, die so ausgestaltet ist, dass, wenn das Fahrerhaus im Fall eines Frontalzusammenstoßes auf ein Hindernis aufprallt, ein Bruch in der ersten Verbindungsvorrichtung auftritt, wenn eine Schwellenkraft zwischen dem Fahrerhaus und dem Rahmen in einer ersten Kollisionsphase überschritten wird, und weiter dazu ausgestaltet ist, dass, nach dem Bruch, die erste Verbindervorrichtung eine Rückwärtsbewegung des Fahrerhauses relativ zu dem Rahmen bei niedriger Kraftübertragung zwischen dem Fahrerhaus und dem Rahmen unterhalb der Schwellenkraft über eine vorgegebene Rückwärtsbewegungsdistanz der B-Säule relativ zu dem Rahmen in einer zweiten Kollisionsphase zulässt, wobei in der Verbindungsstruktur eine zweite Verbindungsvorrichtung (20; 106; 14) vorhanden ist, die dazu ausgestaltet ist, so dass sie in einer dritten, auf die zweite Kollisionsphase folgenden Phase eine erhöhte Kraftübertragung zwischen dem Fahrerhaus und dem Rahmen bewirkt, **dadurch gekennzeichnet, dass**
die erste Verbindungsvorrichtung (60, 66; 14, 104; 102, 18, 19; 14, 25) weiter dazu ausgestaltet ist, so dass sie die Rückwärtsbewegung der Fahrerkabine mit niedriger Kraftübertragung unterhalb der Schwellenkraft auf den Rahmen so ermöglicht, dass die vorgegebene Rückwärtsbewegungsdistanz der B-Säule der Fahrerkabine relativ zu dem Rahmen in der zweiten Kollisionsphase im Bereich von 50 bis 150 mm ist,
und dass die zweite Verbindungsvorrichtung (20; 106; 14) dazu ausgestalt ist, so dass sie in der dritten, auf die zweite Kollisionsphase folgenden Phase die erhöhte Kraftübertragung zwischen Fahrerhaus und Rahmen mit wenigstens 30% der Schwellenkraft oberhalb des niedrigsten Kraftübertragungsniveaus in der zweiten Phase bei weiterer Rückwärtsbewegung des Fahrerhauses relativ zu dem Rahmen über die vorgegebene Rückwärtsbewegungsdistanz hinaus bewirkt, wobei die zweite Verbindungsvorrichtung weiter dazu ausgestaltet ist, so dass die erhöhte Kraftübertragung auf einem Niveau unterhalb der Fahrerhausfestigkeit liegt.

2. Lastkraftwagen nach Anspruch 1, **dadurch gekennzeichnet, dass** die erste Verbindungsvorrichtung (60, 66; 14, 104, 102, 18, 19; 14, 25) weiter dazu ausgestaltet ist, so dass die niedrige Kraftübertragung unterhalb der Schwellenkraft in der zweiten Kollisionsphase unterhalb eines Niveaus von 50% der Schwellenkraft ist.

3. Lastkraftwagen nach Anspruch 1 oder 2, **dadurch gekennzeichnet, dass** die zweite Verbindungsvorrichtung (20; 106; 14) dazu ausgestaltet ist, so dass sie in der auf die zweite Kollisionsphase folgenden dritten Phase eine erhöhte Kraftübertragung zwischen dem Fahrerhaus und dem Rahmen oberhalb der Schwellenkraft bei weiterer Rückwärtsbewegung der Fahrerkabine relativ zu dem Rahmen über die vorgegebene Rückwärtsbewegungsdistanz hinaus bewirkt.

4. Lastkraftwagen nach einem der vorhergehenden Ansprüche, **dadurch gekennzeichnet, dass** die ersten Verbindungsvorrichtung ein Verbindungsglied (60) aufweist, das durch ein erstes drehbares Verbindungsmittel (62) in Bezug auf das Fahrerhaus und durch ein zweites drehbares Verbindungsmittel (64) in Bezug auf den Rahmen auf einem Niveau vertikal unterhalb des ersten Verbindungsmittels befestigt ist, und dass das Verbindungsglied in Bezug auf das Fahrerhaus oder auf den Rahmen mit einer weiteren Verbindung (66) verbunden ist, die auf Abstand zu dem ersten und dem zweiten Verbindungsmittel liegt und die dazu ausgestaltet ist, eine vorgegebene Belastungsgrenze zu haben, so dass die Verbindung bricht, wenn die Kraft zwischen der Fahrerkabine und dem Rahmen die Schwellenkraft überschreitet, wonach das Verbindungsglied (60) frei zum Zurückschwenken ist, was das erste Verbindungsmittel vertikal näher heran und nach hinten in Bezug auf das zweite Verbindungsmittel bringt, um so die vorgegebene Rückwärtsbewegungsdistanz der B-Säule des Fahrerhauses relativ zu dem Rahmen mit einer niedrigen Kraftübertragung zwischen dem Fahrerhaus und dem Rahmen unterhalb von 50% der Schwellenkraft in der zweiten Kollisionsphase durch Drehung des Verbindungsgliedes bereitzustellen.

5. Lastkraftwagen nach Anspruch 4, **dadurch gekennzeichnet, dass** das erste und/oder das zweite Verbindungsmittel (62, 64) einen Bolzen, der die Drehung des Verbindungsgliedes erlaubt, oder eine permanente Verbindung umfasst, die die Drehung durch plastische Verformung von Material in dem Gebiet der permanenten Verbindung erlaubt, wobei das Verbindungsglied (60) und das erste und zweite Verbindungsmittel (62, 64) so dimensioniert und angeordnet sind, dass die Drehung des Verbindungsgliedes (60) während der Rückwärtsbewegung des Fahrerhauses relativ zu dem Rahmen mit einer Kraftübertragung unterhalb von 50% der Schwellenkraft über die vorgegebene Rückwärtsbewegungsdistanz in der zweiten Kollisionsphase erfolgt.

6. Lastkraftwagen nach einem der Ansprüche 1 bis 3, **dadurch gekennzeichnet, dass** die erste Verbindungsvorrichtung erste und zweite Gleitverbindungselemente (102, 18) aufweist, die durch eine Verbindung mit einer vorgegebenen Belastungsgrenze verbunden sind und die, nach Bruch der Verbindung bei der vorgegebenen Belastungsgrenze, wenn die Kraft zwischen Fahrerhaus und Rahmen die Schwellenkraft überschreitet, in Bezug zueinander über eine begrenzte Distanz gleitfähig sind, wobei das ersten Gleitverbindungselement in Bezug auf das Fahrerhaus befestigt ist und das zweite Gleitverbindungselement in Bezug auf den Rahmen befestigt ist, wobei die ersten und zweiten Gleitelemente so orientiert sind, dass ihre relative Gleitrichtung eine mit der Rückwärtsbewegungsrichtung des Fahrerhauses in der zweiten Kollisionsphase gemeinsame Richtungskomponente hat, wobei die begrenzte Distanz des Gleitens zwischen dem ersten und zweiten Gleitelement so ausgestaltet ist, dass die Bewegung der Gleitverbindungselemente über die begrenzte Distanz in der vorgegebenen Rückwärtsbewegungsdistanz der B-Säule des Fahrerhauses relativ zu dem Rahmen in der zweiten Kollisionsphase resultiert, wonach weitere Rückwärtsbewegung blockiert wird und die zweite Verbindungsvorrichtung die erhöhte Kraftübertragung zwischen Fahrerhaus und Rahmen in der dritten Kollisionsphase verursacht.

7. Lastkraftwagen nach einem der vorhergehenden Ansprüche, **dadurch gekennzeichnet, dass** die zweite Verbindungsvorrichtung (20; 106; 14) so dimensioniert und angeordnet ist, dass die erhöhte Kraftübertragung durch fortschreitende mechanische Deformation von Bereichen in der zweiten Verbindungsvorrichtung bewirkt wird.

8. Lastkraftwagen nach Anspruch 7, **dadurch gekennzeichnet, dass** die zweite Verbindungsvorrichtung einen gebogenen Arm (14) aufweist, der dazu ausgestaltet ist, um in der Kraftübertragung zwischen dem Fahrerhaus und dem Rahmen wirksam zu werden, nachdem die erste Verbindungsvorrichtung die vorgegebene Rückwärtsbewegung des Fahrerhauses relativ zum Rahmen in der zweiten Kollisionsphase ermöglicht hat, wobei der gebogene Arm so dimensioniert und angeordnet ist, dass er in der dritten Kollisionsphase durch weitere Rückwärtsbewegung des Fahrerhauses in Bezug auf den Rahmen fortschreitend weiter gebogen wird, wobei das fortschreitende weitere Biegen die erhöhte Kraftübertragung zwischen dem Fahrerhaus und dem Rahmen unterhalb der Fahrerhausfestigkeit in der dritten Kollisionsphase bewirkt.

9. Lastkraftwagen nach Anspruch 7, **dadurch gekennzeichnet, dass** die zweite Verbindungsvorrichtung einen Verbinder (26) aufweist, der mit einem ersten Bereich in Bezug auf eines von Fahrerhaus und Rahmen fixiert ist und der auf Abstand dazu einen zweiten Bereich hat, der in einer Öffnung eines Elements aufgenommen ist, das in Bezug auf das andere von Fahrerhaus und Rahmen fixiert ist, wobei an die Öffnung eine lineare Zone (28) geschwächter Materialdicke anschließt, die so dimensioniert und ausgestaltet ist, dass der zweite Bereich des Verbinders entlang der Zone mit der geschwächten Materialdicke gezogen wird, was in der dritten Kollisionsphase bei weiterer Rückwärtsbewegung des Fahrerhause in Bezug auf den Rahmen die Zone aufreißt oder aufweitet, um die erhöhte Kraftübertragung zwischen Fahrerhaus und Rahmen unterhalb der Fahrerhausfestigkeit in der dritten Kollisionsphase zu liefern.

10. Lastkraftwagen nach Anspruch 7, **dadurch gekennzeichnet, dass** die zweite Verbindungsvorrichtung (162) eine Metallverformungsstruktur (106) aufweist, die in Bezug auf eines von Fahrerhaus und Rahmen fixiert ist und die dazu in der Lage ist, durch Einknicken oder mechanisches Versagen verkürzt zu werden, wenn Kraft darauf ausgeübt wird, und die ein Druck ausübendes Element aufweist, das mit dem anderen von Fahrerhaus und Rahmen gekoppelt ist, wobei das druckübertragende Element dazu ausgestaltet ist, am Ende der Rückwärtsbewegung des Fahrerhauses in Bezug auf den Rahmen über die vorgegebene Rückwärtsbewegungsdistanz in der zweiten Kollisionsphase in kraftübertragenden Eingriff mit der Deformationsstruktur zu kommen, um die Deformationsstruktur (106) zu verkürzen, um in der dritten Kollisionsphase weitere Rückwärtsbewegung unter fortschreitender Deformation und Verkürzung der Metalldeformationsstruktur unter Bereitstellung der erhöhten Kraftübertragung zwischen Fahrerhaus und Rahmen unterhalb der Fahrerhausfestigkeit zu ermöglichen.

## Revendications

1. Camion à cabine avancée comportant un châssis et une cabine montée sur le châssis, ladite cabine comportant un pilier A et un pilier B dans un sens longitudinal de la cabine derrière le pilier A, ladite cabine présentant une force de cabine définie en tant que le niveau de force au-dessus duquel une force agissant sur le pilier A dans le sens du pilier B amène le pilier A à se rapprocher du pilier B par une déformation permanente de cabine, ladite cabine étant montée sur le châssis par une structure de raccordement comportant un premier dispositif de raccordement qui est agencé de sorte que, lorsque la cabine subit un impact sur un obstacle dans le cas d'une collision frontale, une cassure se produit dans le premier dispositif de raccordement lorsqu'une force de seuil entre la cabine et le châssis est dépassée au cours d'une première phase de la collision, et est en outre agencé de sorte que, après la cassure, le premier dispositif de raccordement permet un déplacement vers l'arrière de la cabine par rapport au châssis avec un faible transfert de force entre la cabine et le châssis au-dessous de la force de seuil pour une distance prédéterminée de déplacement vers l'arrière du pilier B par rapport au châssis au cours d'une deuxième phase de la collision, dans lequel, dans la structure de raccordement, il est prévu un deuxième dispositif de raccordement (20 ; 106 ; 14) qui est agencé de manière à provoquer, au cours d'une troisième phase après la deuxième phase de la collision, un transfert de force accru entre la cabine et le châssis, **caractérisé en ce que**
le premier dispositif de raccordement (60, 66 ; 14, 104 ; 102, 18, 19 ; 14, 25) est en outre agencé de manière à permettre ledit déplacement vers l'arrière de la cabine avec un faible transfert de force au-dessous de la force de seuil vers le châssis de sorte que ladite distance prédéterminée de déplacement vers l'arrière du pilier B de la cabine par rapport au châssis au cours de la deuxième phase de la collision soit dans la plage de 50 à 150 mm,
et **en ce que** le deuxième dispositif de raccordement (20 ; 106 ; 14) est agencé de manière à amener, au cours de la troisième phase après la deuxième phase de la collision, le transfert de force accru entre la cabine et le châssis à être à au moins 30 % de la force de seuil au-dessus du plus bas niveau de transfert de force dans la deuxième phase lors de la poursuite du déplacement vers l'arrière de la cabine par rapport au châssis au-delà de la distance prédéterminée de déplacement vers l'arrière, dans lequel le deuxième dispositif de raccordement est en outre agencé de sorte que le transfert de force accru soit à un niveau au-dessous de la force de cabine.

2. Camion selon la revendication 1, **caractérisé en ce que** le premier dispositif de raccordement (60, 66 ; 14, 104 ; 102, 18, 19 ; 14, 25) est en outre agencé de sorte qu'un faible transfert de force au-dessous de la force de seuil au cours de la deuxième phase de la collision soit inférieur au niveau de 50 % de la force de seuil.

3. Camion selon la revendication 1 ou 2, **caractérisé en ce que** le deuxième dispositif de raccordement (20 ; 106 ; 14) est agencé de manière à provoquer, au cours de la troisième phase après la deuxième phase de la collision, un transfert de force accru entre la cabine et le châssis au-dessus de la force de seuil lors de la poursuite d'un déplacement vers l'arrière de la cabine par rapport au châssis au-delà de la distance prédéterminée de déplacement vers l'arrière.

4. Camion selon l'une quelconque des revendications précédentes, **caractérisé en ce que** le premier dispositif de raccordement comprend un organe de raccordement (60) raccordé par un premier moyen de raccordement rotatif (62) par rapport à la cabine et raccordé par un deuxième moyen de raccordement rotatif (64) par rapport au châssis à un niveau verticalement au-dessous du premier moyen de raccordement, et **en ce que** l'organe de raccordement est raccordé par rapport à la cabine ou au châssis avec un autre raccordement (66) qui est espacé des premier et deuxième moyens de raccordement et qui est agencé pour avoir un point de rupture prédéterminé de sorte que le raccordement rompt lorsque la force entre la cabine et le châssis dépasse la force de seuil, après quoi l'organe de raccordement (60) est libre de pivoter vers l'arrière, en amenant le premier moyen de raccordement verticalement plus près du deuxième moyen de raccordement et vers l'arrière par rapport au deuxième moyen de raccordement, pour fournir la distance prédéterminée de déplacement vers l'arrière du pilier B de la cabine par rapport au châssis avec un faible transfert de force entre la cabine et le châssis au-dessous de 50 % de la force de seuil au cours de la deuxième phase de la collision par une rotation de l'organe de raccordement.

5. Camion selon la revendication 4, **caractérisé en ce que** les premier et/ou deuxième moyens de raccordement (62, 64) comprennent un boulon permettant une rotation de l'organe de raccordement ou un raccordement permanent permettant une rotation par déformation plastique de matériau dans la zone du raccordement permanent, dans lequel l'organe de raccordement (60) et les premier et deuxième moyens de raccordement (62, 64) sont dimensionnés et agencés de sorte qu'une rotation de l'organe de raccordement (60) au cours d'un déplacement vers l'arrière de la cabine par rapport au châssis intervienne avec un faible transfert de force inférieur à 50 % de la force de seuil sur ladite distance prédéterminée de déplacement vers l'arrière au cours de la deuxième phase de la collision.

6. Camion selon l'une quelconque des revendications 1 à 3, **caractérisé en ce que** le premier dispositif de raccordement comprend des premier et deuxième éléments de raccordement coulissants (102, 18) qui sont raccordés l'un à l'autre par un raccordement avec un point de rupture prédéterminé et qui, après une rupture du raccordement avec un point de rupture prédéterminé lorsque la force entre la cabine et le châssis dépasse la force de seuil, peuvent coulisser l'un par rapport à l'autre sur une distance limitée, le premier élément de raccordement coulissant étant raccordé par rapport à la cabine et le deuxième élément de raccordement coulissant étant raccordé par rapport au châssis, dans lequel les premier et deuxième éléments coulissants sont orientés de sorte que leur sens de coulissement relatif comporte une composante directionnelle en commun avec le sens de déplacement vers l'arrière de la cabine au cours de la deuxième phase de la collision, dans lequel la distance limitée de coulissement entre les premier et deuxième éléments coulissants est agencée de sorte qu'un déplacement des éléments de raccordement coulissants sur la distance limitée engendre ladite distance prédéterminée de déplacement vers l'arrière du pilier B de la cabine par rapport au châssis au cours de la deuxième phase de la collision, après quoi la poursuite du déplacement vers l'arrière est bloquée et le deuxième dispositif de raccordement provoque ledit transfert de force accru entre la cabine et le châssis au cours de la troisième phase de la collision.

7. Camion selon l'une quelconque des revendications précédentes, **caractérisé en ce que** le deuxième dispositif de raccordement (20 ; 106 ; 14) est dimensionné et agencé de sorte que le transfert de force accru soit provoqué par une déformation mécanique progressive de portions du deuxième dispositif de raccordement.

8. Camion selon la revendication 7, **caractérisé en ce que** le deuxième dispositif de raccordement comprend un bras plié (14) qui est agencé pour devenir efficace dans la force de transmission entre la cabine et le châssis après que le premier dispositif de raccordement est autorisé à effectuer ledit déplacement vers l'arrière prédéterminé de la cabine par rapport au châssis au cours de la deuxième phase de la collision, dans lequel le bras plié est dimensionné et agencé de manière à être progressivement plié davantage au cours de la troisième phase de la collision lors de la poursuite du déplacement vers l'arrière de la cabine par rapport au châssis, la poursuite du pliage progressif provoquant le transfert de force accru entre la cabine et le châssis au-dessous de la force de cabine au cours de la troisième phase de la collision.

9. Camion selon la revendication 7, **caractérisé en ce que** le deuxième dispositif de raccordement (20) comprend un raccordement (26) fixé à une première portion par rapport à l'un de la cabine et du châssis et comportant une deuxième portion espacée reçue dans une ouverture d'un élément fixé par rapport à l'autre de la cabine et du châssis, l'ouverture étant adjacente à une zone linéaire (28) d'épaisseur de matériau réduite qui est dimensionnée et agencée de sorte que la deuxième portion du raccordement soit tirée le long de la zone d'épaisseur de matériau réduite lors de son déchirement ou de son élargissement au cours de la troisième phase de la collision pendant la poursuite du déplacement vers l'arrière de la cabine par rapport au châssis pour fournir le transfert de force accru entre la cabine et le châssis au-dessous de la force de cabine au cours de la troisième phase de la collision.

10. Camion selon la revendication 7, **caractérisé en ce que** le deuxième dispositif de raccordement (162) comprend une structure de déformation métallique (106) fixée à l'un de la cabine et du châssis et capable d'être raccourcie par effondrement ou affaissement mécanique sous l'effet de la force exercée sur celle-ci, et un élément de pression couplé à l'autre de la cabine et du châssis, l'élément de pression étant agencé pour se mettre en prise de manière à transmettre une force avec la structure de déformation à la fin du déplacement vers l'arrière de la cabine par rapport au châssis sur la distance prédéterminée de déplacement vers l'arrière au cours de la deuxième phase de la collision pour raccourcir la structure de déformation (106) afin de permettre la poursuite du déplacement vers l'arrière au cours de la troisième phase de la collision sous l'effet d'une déformation progressive et pour raccourcir la structure de déformation métallique en fournissant la force de transfert accrue entre la cabine et le châssis au-dessous de la force de cabine.
